(19) Europäisches Patentamt
European Patent Office
Office européen des brevets

(11) **EP 4 440 095 A1**

(12) **EUROPEAN PATENT APPLICATION**
published in accordance with Art. 153(4) EPC

(43) Date of publication:
**02.10.2024 Bulletin 2024/40**

(21) Application number: **22935256.2**

(22) Date of filing: **30.03.2022**

(51) International Patent Classification (IPC):
**H04N 1/393** (2006.01)

(52) Cooperative Patent Classification (CPC):
**H04N 1/393**

(86) International application number:
**PCT/JP2022/015992**

(87) International publication number:
**WO 2023/188110 (05.10.2023 Gazette 2023/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **JAI Ltd.**
**Yokohama-shi, Kanagawa 221-0052 (JP)**

(72) Inventor: **TAKANO Koji**
**Yokohama-shi, Kanagawa 221-0052 (JP)**

(74) Representative: **Godemeyer Blum Lenze**
**Patentanwälte**
**Partnerschaft mbB - werkpatent**
**An den Gärten 7**
**51491 Overath (DE)**

(54) **IMAGE PROCESSING APPARATUS, IMAGE CAPTURING APPARATUS, AND IMAGE PROCESSING METHOD**

(57) Provided is a picture image processing apparatus capable of improving the degree of freedom in picture image data reduction.

A picture image processing apparatus 10 according to a first embodiment of the present invention includes a circuit device 100 having a horizontal reduction circuit 102 that reduces input picture image data in the horizontal direction at a specified horizontal reduction rate and a vertical reduction circuit 104 that reduces input picture image data in the vertical direction at a specified vertical reduction rate. According to the picture image processing apparatus 10 of the first embodiment of the present invention, the picture image processing apparatus capable of improving the degree of freedom in picture image data reduction can be provided.

FIG. 3

EP 4 440 095 A1

**Description**

Technical Field

The present invention relates to a picture image processing apparatus, an imaging apparatus, and a picture image processing method.

Background Art

Generally, the size of an image to be output from a camera (for example, industrial camera) is determined by the number of picture cells of an image sensor mounted on the camera, and one picture cell of the image sensor is output as one picture cell of the image to be output from the camera.

Conventionally, a technique of a camera outputting, as one picture cell, one obtained by addition of output values of a plurality of picture cells (for example, two vertical picture cells and two horizontal picture cells) of an image sensor has been broadly known as binning (see, for example, Patent Literatures 1 and 2). In binning, the output values of the plurality of picture cells of the image sensor are added up, and therefore, an image to be output from the camera is reduced vertically and horizontally at the same reduction rate whose inverse is an integer.

Citation List

Patent Literature

PTL 1: JP2014-110592A
PTL 2: JP2012-242297A

Summary of Invention

Technical Problem

In the conventional technique, there is still room for improvement in the degree of freedom in picture image data reduction.

For this reason, the present invention is mainly intended to provide a picture image processing apparatus capable of improving the degree of freedom in picture image data reduction.

Solution to Problem

The present invention provides a picture image processing apparatus including

a circuit device having
a horizontal reduction circuit that reduces input picture image data in the horizontal direction at a specified horizontal reduction rate, and
a vertical reduction circuit that reduces input picture image data in the vertical direction at a specified vertical reduction rate.

The circuit device may reduce the picture image data in the horizontal direction by the horizontal reduction circuit, and may reduce the picture image data, which has been reduced in the horizontal direction, in the vertical direction by the vertical reduction circuit.

The picture image data may be input to the horizontal reduction circuit in a unit of a picture cell group including a plurality of picture cells arrayed in the horizontal direction, and the horizontal reduction circuit may include a horizontal picture cell shift amount calculator that calculates, based on the horizontal reduction rate, a shift amount of each of the plurality of picture cells in the horizontal direction for reducing the picture image data in the horizontal direction, a horizontal shift picture cell value calculator that calculates a horizontal shift picture cell value, which is a picture cell value of each of the plurality of picture cells after shift in the horizontal direction, based on a picture cell value of each of the plurality of picture cells and the horizontal shift amount, a horizontal picture cell shifter that shifts each of the plurality of picture cells, for which the horizontal shift picture cell values have been calculated and which has been arrayed in the vertical direction, in the horizontal direction based on the horizontal shift amount of the picture cell, a horizontal shift picture cell value adder that adds up the horizontal shift picture cell values of the plurality of picture cells shifted in the horizontal direction for each picture cell position in the horizontal direction, and a horizontally-reduced picture image data former that forms, using a horizontal shift picture cell value addition result, horizontally-reduced picture image data obtained by reducing the picture image data in the horizontal direction.

The horizontal shift picture cell value calculator may divide the picture cell value of each of the plurality of picture cells based on the horizontal reduction rate, and as the horizontal shift picture cell value, may output an added value obtained by addition of a picture cell value corresponding to a picture cell after shift in the horizontal direction among the divided values.

The horizontally-reduced picture image data may be input to the vertical reduction circuit in a unit of a picture cell group including a plurality of picture cells arrayed in the horizontal direction, and the vertical reduction circuit may include a vertical picture cell shift amount calculator that calculates, based on the vertical reduction rate, a shift amount of each of the plurality of picture cells in the vertical direction for reducing the picture image data in the vertical direction, a vertical shift picture cell value calculator that calculates a vertical shift picture cell value, which is a picture cell value of each of the plurality of picture cells after shift in the vertical direction, based on a picture cell value of each of the plurality of picture cells and the vertical shift amount, a vertical picture cell shifter that shifts each of the plurality of picture cells, for which the vertical shift picture cell values have been calculated and which has been arrayed in the horizontal direction, in the vertical direction based on the vertical shift amount of the picture cell, and a vertical shift picture cell value adder that adds up the vertical shift picture cell values of the plurality of picture cells shifted in the vertical direction for each picture cell position in the vertical direction.

The same vertical shift amount may be applied to the plurality of picture cells.

The horizontal reduction circuit may include a multiplier, an adder, and a register.

The vertical reduction circuit may include a multiplier, an adder, and a line buffer.

The horizontal reduction circuit may be able to reduce the picture image data in the horizontal direction at the horizontal reduction rate whose inverse is not an integer.

The vertical reduction circuit may be able to reduce the picture image data in the vertical direction at the vertical reduction rate whose inverse is not an integer.

Different values may be able to be specified as the horizontal reduction rate and the vertical reduction rate.

The same value may be able to be specified as the horizontal reduction rate and the vertical reduction rate.

The circuit device may further include a horizontal separation circuit that color-separates Bayer array picture image data in the horizontal direction, and a horizontal interweaving circuit that interweaves the picture image data, which has been processed via the horizontal separation circuit, in the horizontal direction, and the circuit device may color-separate the Bayer array picture image data in the horizontal direction by the horizontal separation circuit, may reduce the color-separated picture image data in the horizontal direction by the horizontal reduction circuit, and may interweave the picture image data, which has been color-separated and reduced in the horizontal direction, in the horizontal direction by the horizontal interweaving circuit.

The present invention also provides an imaging apparatus including an imaging element that images an object and outputs picture image data on the picture image of the object and the above-described picture image processing apparatus that processes the picture image data output from the imaging element.

The imaging apparatus may further include an input with which a user inputs the horizontal reduction rate and the vertical reduction rate.

The present technique also provides a picture image processing method including

a step of reducing input picture image data in the horizontal direction at a specified horizontal reduction rate, and
a step of reducing the picture image data, which has been reduced in the horizontal direction, in the vertical direction at a specified vertical reduction rate.

Brief Description of Drawings

[FIG. 1] FIG. 1 is a diagram for describing a conventional picture image data reduction method (binning).
[FIG. 2] FIG. 2 is a diagram for describing one example of a picture image data reduction method of the present invention.
[FIG. 3] FIG. 3 is a block diagram showing a configuration example of a picture image processing apparatus according to a first embodiment of the present invention.
[FIG. 4] FIG. 4 is a diagram showing a picture image input and an output picture image (Bayer array picture image) of a color camera.
[FIG. 5] FIG. 5 is an image diagram showing a Bayer picture image reduction method.

[FIG. 6] FIG. 6 is a diagram showing a function example of a horizontal separation circuit.

[FIG. 7] FIG. 7 is a block diagram showing a configuration example of a horizontal reduction circuit.

[FIG. 8] FIG. 8 is a diagram showing a function example of a horizontal shift picture cell value calculator.

[FIG. 9] FIG. 9 is a diagram for describing a method (1) of calculating an incomplete picture cell value.

[FIG. 10] FIG. 10 is a diagram for describing a method (2) of calculating an incomplete picture cell value.

[FIG. 11] FIG. 11 is a diagram for describing a method (3) of calculating an incomplete picture cell value.

[FIG. 12] FIG. 12 is a table showing a sensor output pixel shift amount and a total shift amount with reference to a reduced pixel.

[FIG. 13] FIG. 13 is a diagram showing a function example of a horizontal picture cell shifter.

[FIG. 14] FIG. 14 is a diagram showing a function example of a horizontal shift picture cell value adder.

[FIG. 15] FIG. 15 is a diagram showing a function example of a horizontally-reduced picture image data former.

[FIG. 16] FIG. 16 is a diagram showing a function example of a horizontal interweaving circuit.

[FIG. 17] FIG. 17 is a block diagram showing a configuration example of a vertical reduction circuit.

[FIG. 18] FIG. 18 is a diagram showing a function example of a vertical shift picture cell value calculator.

[FIG. 19] FIG. 19 is a diagram showing a function example of a former line cumulative picture cell value reader.

[FIG. 20] FIG. 20 is a diagram showing a function example of a vertical shift picture cell value adder.

[FIG. 21] FIG. 21 is a diagram showing a function example of a cumulative picture cell value writer.

[FIG. 22] FIG. 22 is a flowchart for describing a picture image processing method in a color mode.

[FIG. 23] FIG. 23 is a flowchart for describing a picture image processing method in a black-and-white mode.

[FIG. 24] FIG. 24 is a block diagram showing a configuration example of an imaging apparatus according to a second embodiment of the present invention.

[FIG. 25] FIG. 25 is a block diagram showing a configuration example of an imaging apparatus according to a third embodiment of the present invention.

[FIG. 26] FIG. 26 is a block diagram showing a configuration example of an imaging apparatus according to a fourth embodiment of the present invention.

[FIG. 27] FIG. 27 is a block diagram showing a configuration example of an imaging system according to a fifth embodiment of the present invention.

[FIG. 28] FIG. 28 is a block diagram showing a configuration example of an imaging system according to a sixth embodiment of the present invention.

Description of Embodiments

Hereinafter, preferred embodiments of the present invention will be described in detail with reference to the attached drawings. Note that in the present specification and the drawings, the same reference numerals are assigned to components having the substantially same functional configurations and overlapping description thereof will be omitted. The embodiments described below are representative embodiments of the present invention, and are not intended to interpret the scope of the present invention as a narrow scope. In the present specification, even in a case where it is described that a picture image processing apparatus, an imaging apparatus, and a picture image processing method according to the present invention produce a plurality of effects, the picture image processing apparatus, the imaging apparatus, and the picture image processing method according to the present invention are only required to produce at least one effect. The effects described in the present specification are merely examples and are not limited, and other effects may be produced.

The present invention will be described in the following order:

0. Introduction;
1. Picture image processing apparatus according to first embodiment of present invention;
2. Imaging apparatus according to second embodiment of present invention;
3. Imaging apparatus according to third embodiment of present invention;
4. Imaging apparatus according to fourth embodiment of present invention;
5. Imaging system according to fifth embodiment of present invention;
6. Imaging system according to sixth embodiment of present invention; and
7. Modifications of present invention.

<0. Introduction>

[Related art and problems]

Generally, the size of an image (picture image) to be output from a camera (imaging apparatus) such as an industrial camera is determined by the number of picture cells of an image sensor (imaging element) mounted on the camera, and one picture cell of the image sensor is output as one picture cell of the image to be output from the camera. Conventionally, a method of a camera outputting, as one picture cell, one obtained by addition of output values (picture cell values) of a plurality of picture cells (for example, two vertical picture cells and two horizontal picture cells) of an image sensor has been broadly known as binning.

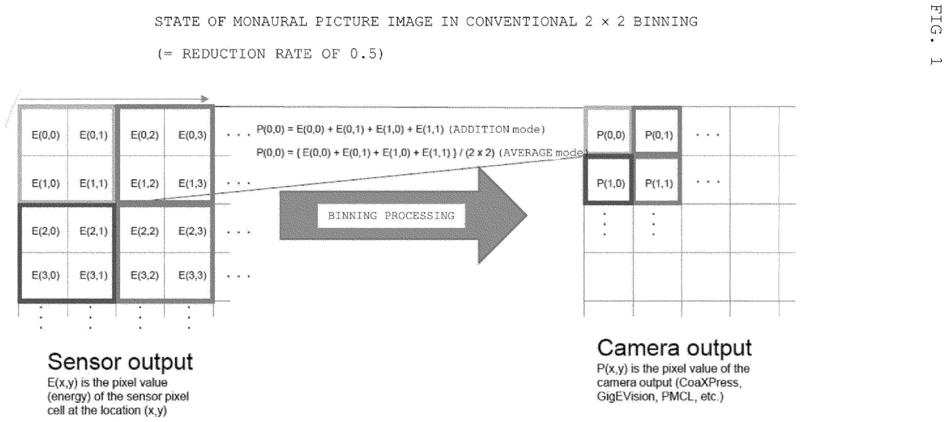

In binning, the output values (picture cell values) of the plurality of picture cells of the image sensor are added up, and therefore, the image to be output from the camera is reduced vertically and horizontally at the same reduction rate whose inverse is an integer. As one example, in a case where the image sensor has $1024 \times 768$ picture cells and $2 \times 2$ binning in which two vertical picture cells and two horizontal picture cells are added up is performed, the image to be output from the camera is output as $512 \times 384$ picture cells. For an existing product, $2 \times 2$ binning (see FIG. 1, FIG. 1 shows an example where a black-and-white picture image is subjected to binning at a reduction rate of 1/2 (reduction rate whose inverse is an integer)) and $4 \times 4$ binning are general.

In a case where a picture image reduced vertically and horizontally at the same reduction rate whose inverse is a non-integer is required, an image output from the camera is generally reduced in a system of a subsequent stage. However, the processing capacity of the system is consumed by such reduction processing, and for this reason, there has been demanded camera-side reduction processing.

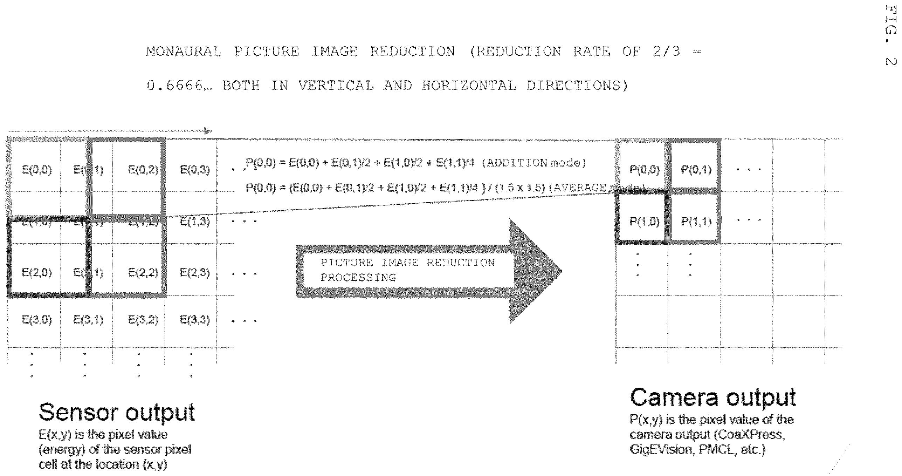

Moreover, there has also been demanded a technique applicable to a case where a picture image reduced vertically and horizontally at a different reduction rate whose inverse is a non-integer is required (see FIG. 2, FIG. 2 shows an example where a black-and-white picture image is reduced vertically and horizontally at a reduction rate of 2/3 (reduction rate whose inverse is a non-integer)). Further, there has also been demanded a technique applicable to a case where a picture image reduced vertically and horizontally at different reduction rates is required. That is, there has been demanded a technique of improving the degree of freedom in reduction of the image to be output from the camera.

The example of FIG. 2 will be supplementarily described. For example, in the case of the reduction rate of 2/3, when the horizontal width of an input picture image is 30 pixels, the horizontal width of an output picture image which is a reduced picture image is 20 pixels. Thus, in the reduction processing, the sum of luminance values (picture cell values) of 1.5 pixels of the picture image output from the imaging element needs to be output as a luminance value of one pixel of the output picture image, as shown in FIG. 2.

Improvement in the degree of freedom in reduction of the image to be output from the camera can optimize the aspect ratio of such an image according to the numbers of vertical and horizontal picture cells of various displays for displaying the image, and therefore, is extremely effective.

[Performance expected from picture image processing apparatus]

Hereinafter, performance expected from the picture image processing apparatus that reduces picture image data output from the image sensor will be described with reference to the related art. Note that the presence or absence of the performance described below does not affect patent establishment.

(Processing speed)

There has been demanded computation for picture image reduction with a rate in the transfer band of the picture image data read from the image sensor.

(Picture image quality)

An algorithm for reducing the picture image at a high speed includes the following three methods, and a high picture image quality has been demanded particularly for the industrial camera. However, there is a trade-off between picture image quality improvement and algorithm complexity.

Nearest neighbor interpolation (nearest neighbor): a luminance value of a closest picture cell corresponding to coordinates after reduction is used, and a computation amount is small, but a picture image quality is low;

Linear interpolation (bi-linear, bi-cubic, Lanczos3, etc.): a reduced picture image is calculated by interpolation of a peripheral picture cell value, and an interpolation computation amount and a calculation amount are great, but a picture image quality is high; and

Average pixel method (area averaging): picture cells are added up with a picture cell area ratio corresponding to a reduced picture image, and a computation amount is smaller and a picture image quality is higher than those of an algorithm using interpolation.

(Limitations on reduction rate)

Since reduction is performed at the rate of the integer multiple in binning, binning cannot be applied to the following two demands:

picture image data is reduced at a reduction rate whose inverse is a non-integer decimal; and
picture image data is reduced vertically and horizontally at different reduction rates.

(Implementation cost)

In the case of implementation in the camera, an implementation cost is high when a memory that temporarily saves all picture images, such as a frame buffer, or a large-sized computation unit is used.

(Application to black-and-white/color picture image data)

The picture image processing apparatus is applicable not only to black-and-white (monochroic) picture image data but also to Bayer array (color) picture image data.

(Application to addition mode/average mode)

In binning, the value obtained by addition of the plurality of picture cells is generally taken as the output of the camera, and therefore, the luminance value is increased by binning (addition mode). On the other hand, there has also been demanded an operation (average mode) of not changing a luminance average in simple picture image reduction.
As a result of intensive study, an inventor(s) has devised a picture image processing apparatus according to the present invention as a picture image processing apparatus capable of improving the degree of freedom in picture image data reduction (solving the above-described problems). As a result of further study, the inventor(s) has developed a picture image processing apparatus according to a first embodiment of the present invention as the picture image processing apparatus capable of solving the above-described problems.

<1. Picture image processing apparatus according to first embodiment of present invention>

<<Configuration example of picture image processing apparatus>>

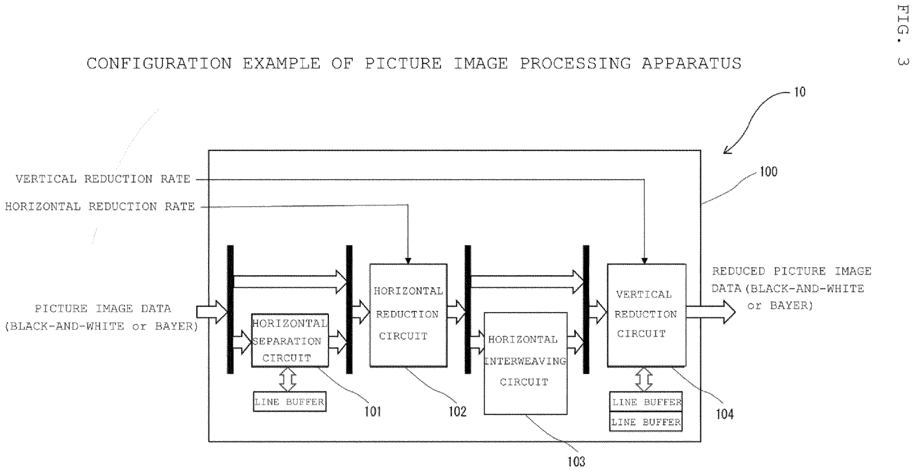

Hereinafter, the picture image processing apparatus according to the first embodiment of the present invention will be described with reference to the drawings. FIG. 3 is a block diagram showing a configuration example of the picture image processing apparatus according to the first embodiment of the present invention. In the following description, for the sake of convenience, picture image data will also be merely referred to as a "picture image," picture cell data will also be merely referred to as a "picture cell," a picture cell will also be merely referred to as a "pixel," and a picture cell value will also be merely referred to as a "pixel value."
A picture image processing apparatus 10 according to the first embodiment as shown in FIG. 3 is an apparatus (picture image reduction apparatus) that performs processing (picture image reduction processing) of reducing input picture image data in the vertical direction and/or the horizontal direction. Specifically, the picture image processing apparatus 10 is an apparatus that performs processing (picture image reduction processing) of reducing input picture image data which is picture image data output from an imaging element (image sensor) in the vertical direction and/or the horizontal direction.
The picture image processing apparatus 10 is applicable to any of a black-and-white picture image and a color picture image (picture image in which picture cells are in a Bayer array) output from the imaging element.
The black-and-white picture image is a picture image output with light intensities, which are detected by light receivers (e.g., photodiodes) of all the picture cells of the imaging element, as picture cell values.

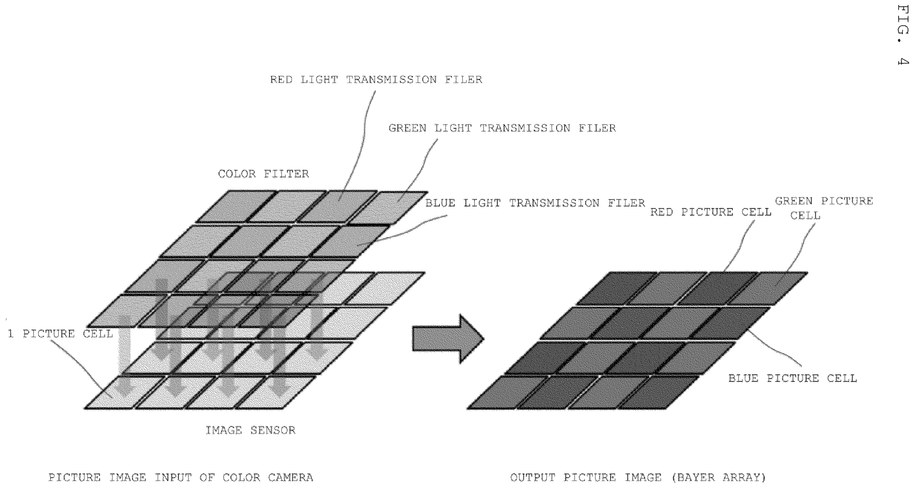

FIG. 4 is a diagram showing a picture image input and an output picture image (picture image in which picture cells are in a Bayer array) of a color camera. The color picture image is a picture image output with a light intensity, which is detected by a light receiver (e.g., photodiode) of each picture cell (each pixel) after only light with a specific wavelength (color) has entered the light receiver through a color filter, as a picture cell value. As the color filter, red, green, and blue filters are alternately arranged for each pixel.
In the picture image processing apparatus 10, different values can be specified as a horizontal reduction rate and a vertical reduction rate. In the picture image processing apparatus 10, the same value can be specified as the horizontal reduction rate and the vertical reduction rate.
As shown in FIG. 3, the picture image processing apparatus 10 includes a circuit device 100 having a horizontal reduction circuit 102 that reduces the input picture image data in the horizontal direction at the specified horizontal reduction rate and a vertical reduction circuit 104 that reduces the input picture image data in the vertical direction at the specified vertical reduction rate. The circuit device 100 may be connected to an input with which a user inputs a desired horizontal reduction rate and/or a desired vertical reduction rate.

The horizontal reduction circuit 102 can reduce the picture image data in the horizontal direction not only at a horizontal reduction rate whose inverse is an integer but also at a horizontal reduction rate whose inverse is a non-integer (not an integer). The horizontal reduction circuit 102 includes, as one example, a multiplier, an adder, and a register.

The vertical reduction circuit 104 can reduce the picture image data in the vertical direction not only at a vertical reduction rate whose inverse is an integer but also at a vertical reduction rate whose inverse is a non-integer (not an integer). The vertical reduction circuit 104 includes, as one example, a multiplier, an adder, and a line buffer.

The circuit device 100 further includes, as one example, a horizontal separation circuit 101 that color-separates the Bayer array picture image data in the horizontal direction and a horizontal interweaving circuit 103 that interweaves the Bayer array picture image data in the horizontal direction.

As one example, the circuit device 100 reduces the input picture image data in the horizontal direction by the horizontal reduction circuit 102, and reduces the picture image data, which has been reduced in the horizontal direction, in the vertical direction by the vertical reduction circuit 104.

As one example, the circuit device 100 reduces the input black-and-white picture image data in the horizontal direction by the horizontal reduction circuit 102, and reduces the black-and-white picture image data, which has been reduced in the horizontal direction, in the vertical direction by the vertical reduction circuit 104.

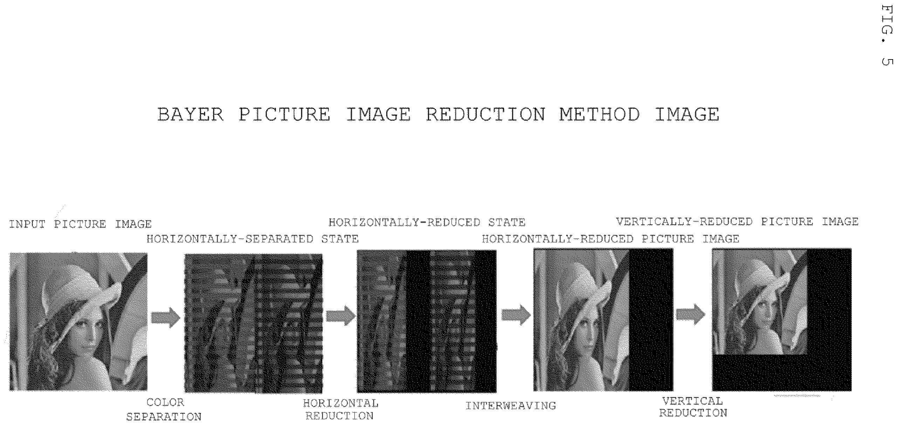

FIG. 5 is an image diagram showing a Bayer picture image reduction method. For example, as shown in FIG. 5, the circuit device 100 color-separates the input color picture image data (Bayer array picture image data) in the horizontal direction by the horizontal separation circuit 101, reduces the color-separated picture image data in the horizontal direction by the horizontal reduction circuit 102, and interweaves, in the horizontal direction, the picture image data color-separated and reduced in the horizontal direction into the Bayer picture image by the horizontal interweaving circuit 103. Subsequently, the circuit device 100 directly reduces, using two line buffers, the picture image interwoven into the Bayer picture image by the vertical reduction circuit 104, as one example.

FIG. 5 will be supplementarily described. First, for each line, the circuit device 100 separates the input picture image into picture images in two colors by the horizontal separation circuit 101. For the separated picture images, the circuit device 100 performs horizontal reduction processing by the horizontal reduction circuit 102. Then, the circuit device 100 interweaves the separated picture images subjected to the horizontal reduction processing into the Bayer picture image by the horizontal interweaving circuit 103 (re-arranges the pixels). Subsequently, for the picture image interwoven into the Bayer picture image, the circuit device 100 performs, by the vertical reduction circuit 104, computation equivalent to that in a case where an internal line buffer holds two lines and color separation is performed alternately using these lines.

In the picture image processing apparatus 10, both an addition mode operation of not changing a total luminance amount before and after picture image data reduction and an average mode operation of not changing a luminance average per pixel before and after picture image data reduction can be performed.

[Data processing unit in circuit device]

In the circuit device 100, the number of pixels to be processed per clock of the circuit device 100 is determined from the band of the pixel output from the image sensor and a limitation on the operating frequency of the circuit device 100. For example, in a case where a picture image with 5320 horizontal pixels × 4600 vertical pixels is read from the image sensor at 35 frames per second, a picture image with $5320 \times 4600 \times 35 = 857$ M pixels needs to be processed per second. Even if the circuit device 100 operates with a clock frequency of 108 MHz, the number of pixels to be processed per cycle in the circuit device 100 is 857 M ÷ 108 M ≈ 8. Thus, in the circuit device 100, a plurality of pixels (eight pixels in this example) needs to be processed in parallel in one cycle. In the present embodiment, the following description will be made assuming that eight pixels are processed in parallel in one cycle in the circuit device 100, as one example. Note that the number of pixels to be processed in parallel in the circuit device 100 is not limited to eight pixels and may be other numbers of pixels (for example, two pixels, four pixels, or 16 pixels). Alternatively, the circuit device 100 may perform the processing on the pixels one by one.

That is, as one example, the picture image data from the image sensor is input to the circuit device 100 in a unit of a picture cell group including a plurality (eight) of picture cells (for example, eight pixels) arrayed in the horizontal direction. More specifically, the picture image is sent from the image sensor to the circuit device 100 one line at a time, and pixels in one line are sequentially input from the left side to the right side.

[Horizontal separation circuit]

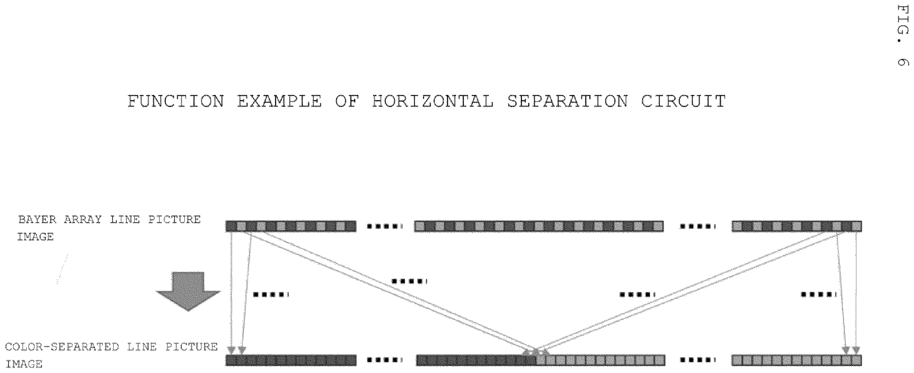

FIG. 6 is a diagram showing a function example of the horizontal separation circuit 101. The horizontal separation circuit 101 operates in a case where the input picture image (picture image data output from the image sensor) is the Bayer array input picture image (picture image in which a plurality of Bayer array line picture images is arranged in the vertical direction). In this case, the picture image (Bayer array line picture image) is sent from the image sensor to the horizontal separation circuit 101 one line at a time, and pixels in one line are sequentially input from the left side to the right side. Thus, every time the pixel is input, an output line picture image is generated using the line buffer. Specifically, the horizontal separation circuit 101 re-arranges the pixels of the Bayer array line picture image into two regions arranged in the horizontal direction such that the pixels in the same color are continuously arranged, and as the output line picture image, outputs a color-separated line picture image having a first-half region where the pixels in one color are continuously arranged and a second-half region where the pixels in the other color are continuously arranged.

[Horizontal reduction circuit]

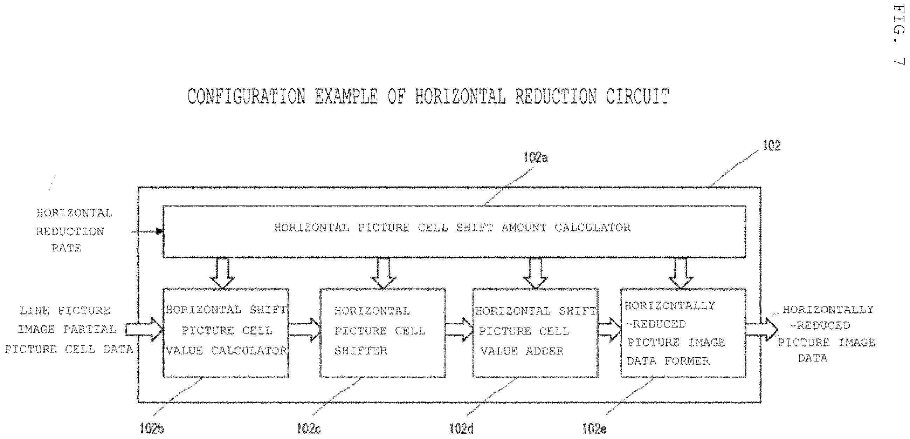

FIG. 7 is a block diagram showing a configuration example of the horizontal reduction circuit 102. As one example, as shown in FIG. 7, the picture image data output from the image sensor is directly input to the horizontal reduction circuit 102 (the case of the black-and-white picture image) or is input to the horizontal reduction circuit 102 via the horizontal separation circuit 101 (the case of the color picture image) in a unit of a picture cell group including a plurality of picture cells arrayed in the horizontal direction. As one example, the horizontal reduction rate specified for the picture image data output from the image sensor via the input by the user is input to the horizontal reduction circuit 102.
The horizontal reduction circuit 102 has a horizontal picture cell shift amount calculator 102a, a horizontal shift picture cell value calculator 102b, a horizontal picture cell shifter 102c, a horizontal shift picture cell value adder 102d, and a horizontally-reduced picture image data former 102e.

(Horizontal picture cell shift amount calculator)

The horizontal picture cell shift amount calculator 102a calculates, based on the horizontal reduction rate, a horizontal picture cell shift amount C(x) which is a shift amount of each of the plurality of picture cells in the horizontal direction for reducing the picture image data in the horizontal direction. When C(x).frac is the decimal part of C(x) and C(x).integer is the integer part of C(x), circuit operation of the horizontal picture cell shift amount calculator 102a is the following pseudo code.

```
//initial coefficient

For(x=0;x<8;x++){C(x)=scale*x;}//scale      is      the

reduction rate

ShiftSum=scale*8;

//circuit operation start

While(){

//computation by circuit

//update coefficient after end of computation

For(x=0;x<8;x++){C(x)=scale*x+ShiftSum.frac;}
```

(Horizontal shift picture cell value calculator)

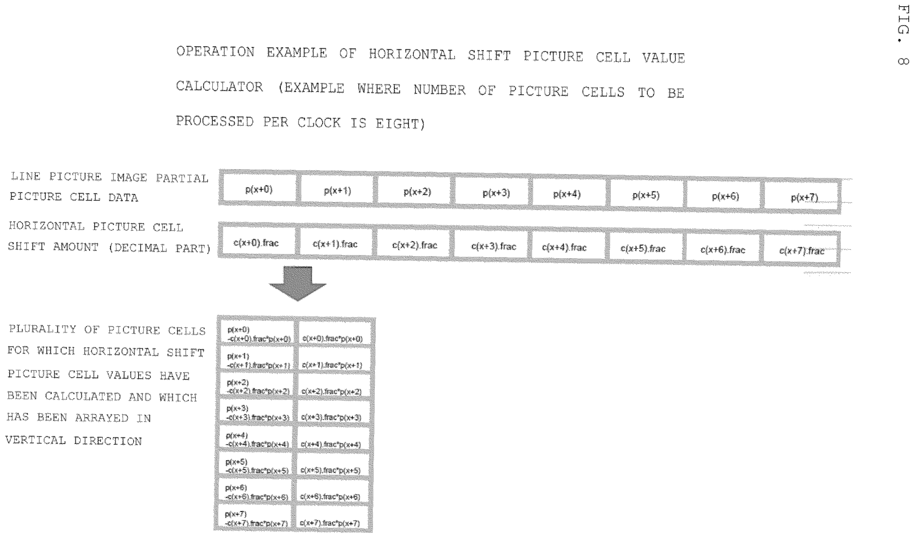

FIG. 8 is a diagram showing a function example of the horizontal shift picture cell value calculator 102b. As shown in FIG. 8, the horizontal shift picture cell value calculator 102b calculates a horizontal shift picture cell value, which is a picture cell value of each of the plurality of picture cells after shift in the horizontal direction, based on the picture cell value of each of the plurality of picture cells (line picture image partial picture cell data) and the horizontal shift amount (horizontal picture cell shift amount (decimal part)). Specifically, from the picture cell value of each picture cell before shift and the shift amount (horizontal picture cell shift amount (decimal part)), the picture cell value after shift is calculated only by integer addition and integer multiplication, and these calculation results are arrayed in the vertical direction.

Specifically, the horizontal shift picture cell value calculator 102b divides the picture cell value of each of the plurality of picture cells based on the horizontal reduction rate, and as the horizontal shift picture cell value, outputs an added value obtained by addition of picture cell values corresponding to a picture cell after shift in the horizontal direction among the divided values. Specifically, the horizontal shift picture cell value calculator 102b divides, by the reduction processing, the luminance value (picture cell value) of the input pixel into one or two corresponding output destination pixels at a rate obtained by the reduction processing, and accumulates the divided luminance values in the output destination pixels. Hereinafter, a specific example will be described in detail.

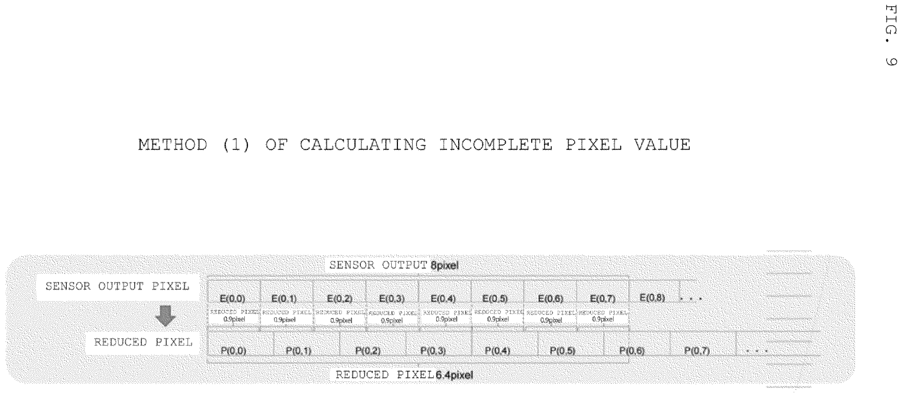

Here, reduction of one horizontal line in the horizontal direction will be described for the sake of simplicity in description. FIG. 9 shows an example where first eight pixels output from the image sensor are reduced at a horizontal reduction rate of 0.8. FIG. 9 shows a case where the picture cells (reduced pixels) after shift are viewed with reference to the output picture cells (sensor output pixels) of the image sensor. The reduction rate of 0.8 is equivalent to a case where the luminance value (picture cell value) of one sensor output pixel is the luminance value of 0.8 reduced pixels. The luminance value of eight sensor output pixels is output as the luminance value of $8 \times 0.8 = 6.4$ pixels after reduction. Thus, which range of the sensor output pixels the reduced picture cell corresponds is as shown in FIG. 9.

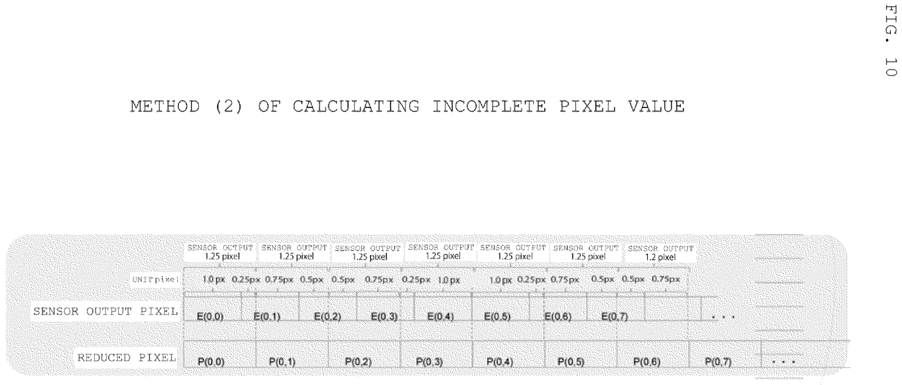

A perspective opposite to that of the example of FIG. 9 (case where the sensor output pixels are viewed with reference to the reduced pixels) will be described with reference to FIG. 10. The luminance values of the plurality of sensor output pixels are taken as the reduced pixel. The rate thereof is 1.25 which is the inverse of the reduction rate of 0.8, and the luminance value of one pixel after reduction is equivalent to the luminance value of 1.25 sensor output pixels. Thus, the luminance value (picture cell value) of E(0,1) is divided and computed. For example, the luminance value of the reduced pixel P(0,0) is calculated by addition of the entirety (luminance value of 1.00 pixel) of E(0,0) and the luminance value of 0.25 pixels of E(0,1) in FIG. 10. The subsequent reduced pixel P(0,1) is calculated by addition of the luminance value of the remaining 0.75 pixels of E(0,1) and the luminance value of 0.5 pixels of E(0,2). The sensor output pixels are sequentially sent to the circuit device 100 in each cycle, and therefore, if eight pixels are processed in one cycle, subsequent eight pixels need to be processed in a subsequent cycle. In the example of FIG. 10, the reduced pixels for which computation is completed and output values are confirmed until the processing of all the first eight sensor output pixels (first to eighth sensor output pixels) ends are six pixels (the integer part of $8 \times 0.8 = 6.4$), and therefore, these confirmed output values of the six pixels are output as valid output values. The confirmed output values of the six pixels are as follows.

$$P(0,0) = 1.00 \times E(0,0) + 0.25 \times E(0,1)$$

$$P(0,1) = 0.75 \times E(0,1) + 0.50 \times E(0,2)$$

$$P(0,2) = 0.50 \times E(0,2) + 0.75 \times E(0,3)$$

$$P(0,3) = 0.25 \times E(0,3) + 1.00 \times E(0,4)$$

$$P(0,4) = 1.00 \times E(0.5) + 0.25 \times E(0,6)$$

$$P(0,5) = 0.75 \times E(0,6) + 0.75 \times E(0,7)$$

$$P(0,6) = 0.50 \times E(0,7)$$

The result for which computation is not completed yet is carried over to subsequent computation of the sensor output pixels. Specifically, the processing transitions to subsequent computation of the sensor output pixels with the luminance value of 0.5 pixels of E(0,7) stored in P(0,6). Hereinafter, such carry-over will be described.

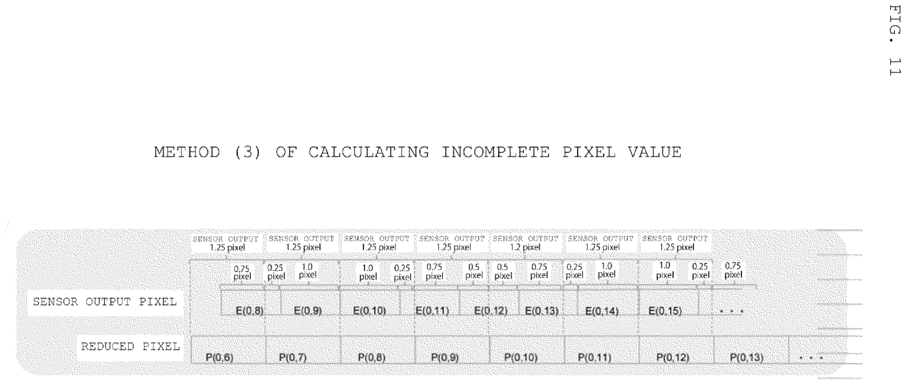

Processing (computation) on subsequent eight sensor output pixels (ninth to sixteenth sensor output pixels) will be described with reference to FIG. 11. As described above, the processing starts with the previous computation result stored in P(0,6). Thus, as shown in FIG. 11, the processing starts from the offset position of the sensor output pixel. In computation, E(0,8) to E(0, 15) are assigned to the corresponding reduced pixels and added in a manner similar to that described above. Confirmed output values of six pixels are as follows.

P(0,6) = 0.50 × E(0,7) + 0.75 × E(0,8), note that 0.50 × E(0,7) is the above-described incomplete carry-over

$$P(0,7) = 0.25 \times E(0,8) + 1.00 \times E(0,9)$$

$$P(0,8) = 1.00 \times E(0.10) + 0.25 \times E(0,11)$$

$$P(0,9) = 0.75 \times E(0,11) + 0.75 \times E(0,12)$$

$$P(0,10) = 0.50 \times E(0,12) + 0.75 \times E(0,13)$$

$$P(0,11) = 0.25 \times E(0,13) + 1.00 \times E(0,14)$$

The result for which computation is not completed yet is carried over to subsequent computation of the sensor output pixels. Specifically, the processing transitions to subsequent computation of the sensor output pixels with the luminance value of 1.00 pixel of E(0,15) stored in P(0,12).

By computation performed as described above, the valid reduced pixels are 12 pixels (integer part of 16 × 0.8 = 12.8) at the timing when the processing for 16 sensor output pixels ends. Thus, P(0,6) to P(0,11) are output as the reduced pixels from the circuit, and P(0,12) in the middle of computation is processed by subsequent computation of the sensor output pixels.

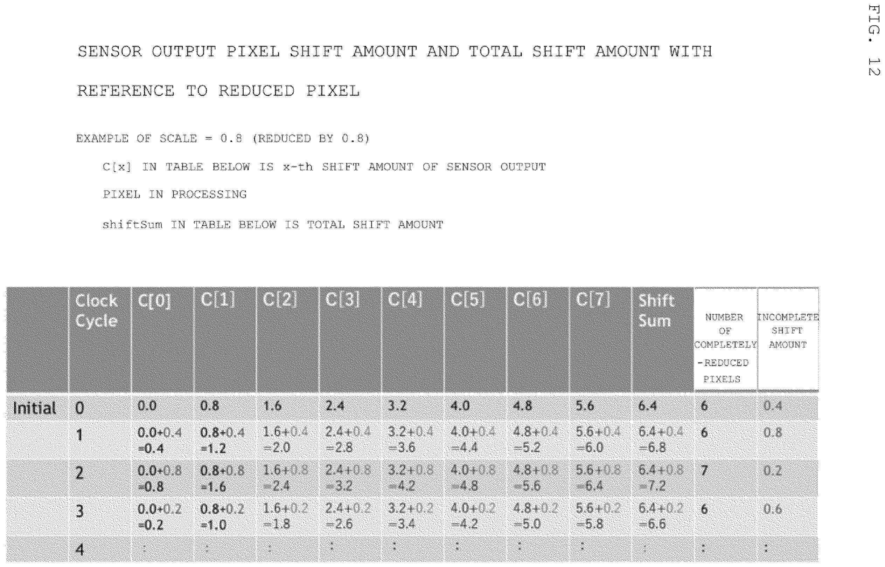

FIG. 12 is a table showing, for each clock cycle, a sensor output pixel shift amount and a total shift amount with reference to the reduced pixel.

(Horizontal picture cell shifter)

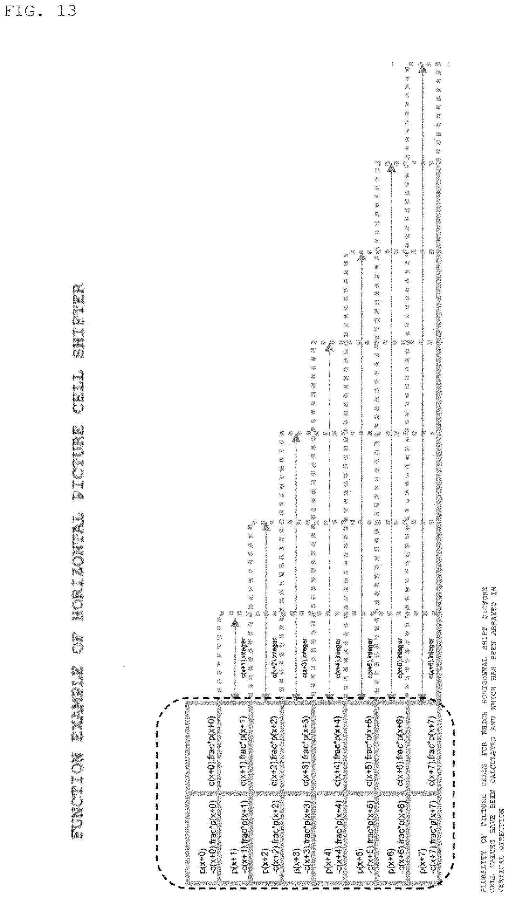

FIG. 13 is a diagram showing a function example of the horizontal picture cell shifter 102c. The horizontal picture cell shifter 102c shifts each of the plurality of picture cells, for which the horizontal shift picture cell values have been calculated and which have been arrayed in the vertical direction, in the horizontal direction based on the horizontal shift amount (horizontal picture cell shift amount) of such a picture cell. Specifically, the horizontal picture cell shifter 102c shifts, using a barrel shifter, the horizontal shift picture cell value obtained by the horizontal shift picture cell value calculator 102b according to the value of the integer part (C(x) integer) of the horizontal picture cell shift amount C(x) obtained by the horizontal picture cell shift amount calculator 102a. Since the picture cell shift amount increases toward a pixel of a latter stage, the barrel shifter for the pixels of the initial stage (uppermost stage) is not necessary and a barrel shifter shift range increases because the shift amount increases for a pixel of a latter stage (lower stage), as shown in FIG. 13. The stepwise shift amount obtained using the barrel shifter as shown in FIG. 13 is a circuit configuration characteristic which is not found in the related art.

(Horizontal shift picture cell value adder)

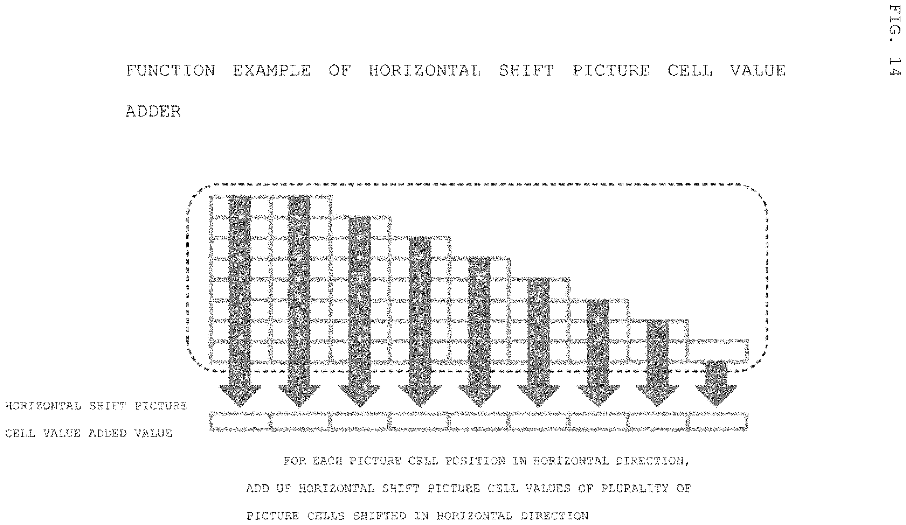

FIG. 14 is a diagram showing a function example of the horizontal shift picture cell value adder 102d. As shown in FIG. 14, the horizontal shift picture cell value adder 102d adds up, for each picture cell position in the horizontal direction, the horizontal shift picture cell values of the plurality of picture cells shifted in the horizontal direction. Specifically, the picture cell values of the plurality of picture cells shifted in the horizontal direction by the horizontal picture cell shifter 102c are added up in the vertical direction, and in this manner, the luminance of the picture cells overlapping with each other after shift in the horizontal direction is calculated. Since the plurality of picture cells arrayed in the vertical direction and shifted in the horizontal direction is in a step shape as a whole, the plurality of picture cells is added up in the vertical direction (for each picture cell position in the horizontal direction) so that the luminance of the overlapping picture cells can be calculated. Since the number of pieces of the picture cell data to be added up by the vertical adder (for each picture cell position in the horizontal direction) decreases toward a pixel of a latter stage (right side in FIG. 14), computation can be performed with a small number of adders. This stepwise adder structure is a circuit configuration characteristic which is not found in the related art.

(Horizontally-reduced picture image data former)

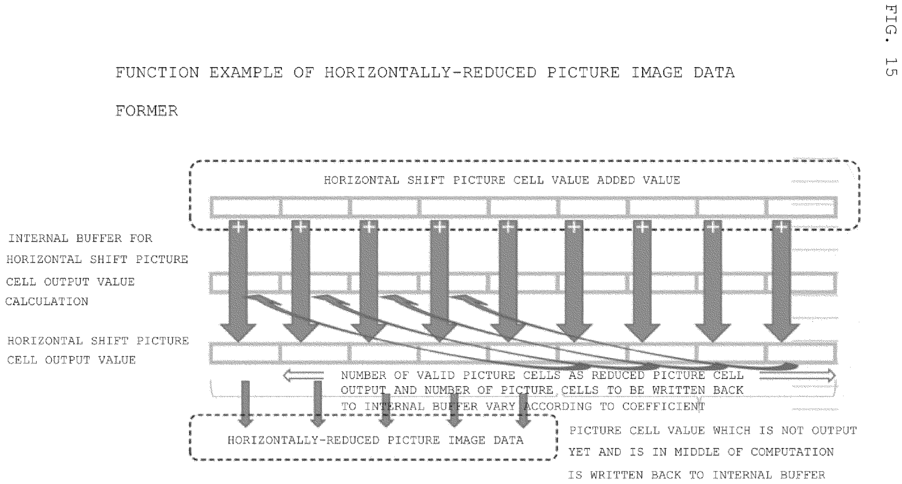

FIG. 15 is a view showing a function example of the horizontally-reduced picture image data former 102e. As shown in FIG. 15, the horizontally-reduced picture image data former 102e forms, using horizontal shift picture cell value addition results (horizontal shift picture cell value added values), horizontally-reduced picture image data obtained by reducing the picture image data in the horizontal direction. The horizontally-reduced picture image data former 102e has an internal buffer for horizontal shift picture cell output value calculation for calculating a horizontal shift picture cell output value which is an output value of the horizontal shift picture cell value. The internal buffer saves picture cell data which has been calculated before a partial picture image (line picture image partial picture cell data) being currently calculated, is in the middle of reduction, and is not output as a reduced picture image yet. Of a result obtained by addition of the internal buffer and the partial picture image data being currently calculated, a picture cell (picture cell whose C(x).integer has been completely processed) which is a computation result outputtable as a reduced picture image is output as a final reduced picture image output. A pending computation result output is added to a partial picture image to be processed subsequently, and therefore, is written back from the leading picture cell of the internal buffer and is provided for the processing in a subsequent clock cycle. The above-described processing is repeatedly performed on all partial picture images, and in this manner, the horizontally-reduced picture image data is finally formed as an output picture image after reduction in the horizontal direction.

[Horizontal interweaving circuit]

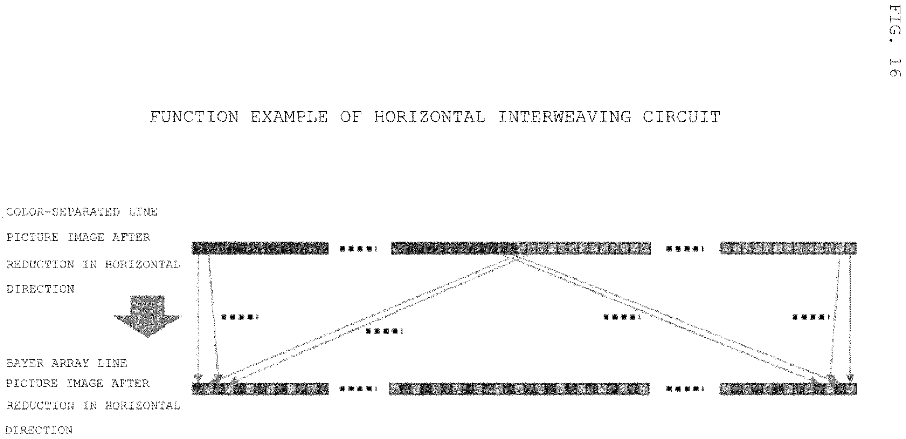

FIG. 16 is a diagram showing a function example of the horizontal interweaving circuit 103. The horizontal interweaving circuit 103 operates in a case where the input picture image (picture image data output from the image sensor) is the Bayer array input picture image (picture image in which the plurality of Bayer array line picture images is arranged in the vertical direction). The line picture image of the picture image data (horizontally-reduced picture image data) output from the horizontally-reduced picture image data former 102e after having been reduced in the horizontal direction is the color-separated line picture image divided into the first-half portion and the second-half portion in the two colors, and the pixels are sequentially output to the horizontal interweaving circuit 103 from the left side to the right side. Thus, every time the pixel is input to the horizontal interweaving circuit 103, the horizontal interweaving circuit 103 interweaves (re-arranges) the pixel into the Bayer array using the line buffer, thereby generating the line picture image (Bayer array line picture image).

[Vertical reduction circuit]

As one example, as shown in FIG. 3, the horizontally-reduced picture image data output from the horizontal reduction circuit 102 is directly input to the vertical reduction circuit 104 (the case of the black-and-white picture image) or is input to the vertical reduction circuit 104 via the horizontal interweaving circuit 103 (the case of the color picture image) in a unit of a picture cell group including a plurality of picture cells arrayed in the horizontal direction. As one example, the vertical reduction rate specified for the picture image data output from the image sensor via the input by the user is input to the vertical reduction circuit 104.

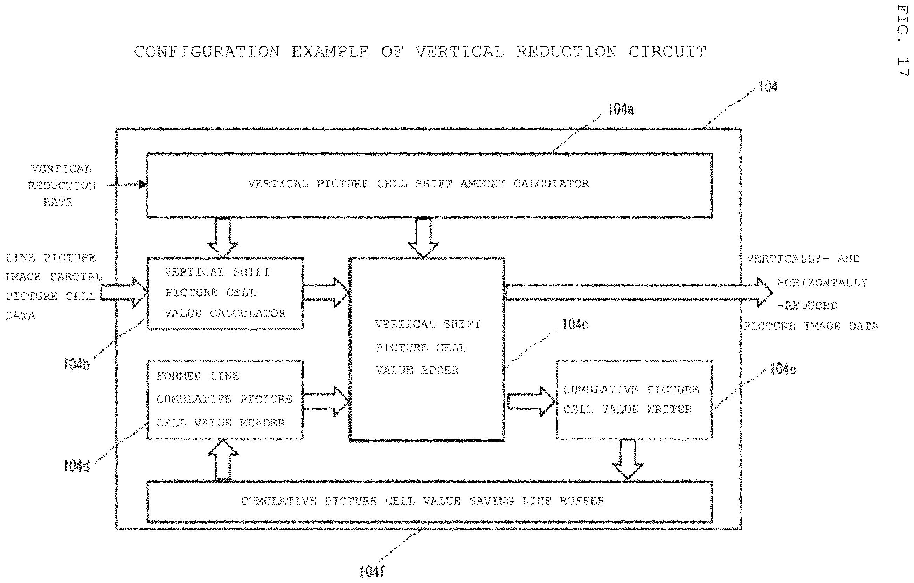

FIG. 17 is a block diagram showing a configuration example of the vertical reduction circuit 104. As shown in FIG. 17, to the vertical reduction circuit 104, the horizontally-reduced picture image data is input to the vertical reduction circuit 104 in a unit of a picture cell group (line picture image partial picture cell data) including a plurality of picture cells arrayed in the horizontal direction.
The vertical reduction circuit 104 has a vertical picture cell shift amount calculator 104a, a vertical shift picture cell value calculator 104b, a vertical shift picture cell value adder 104c, a former line cumulative picture cell value reader 104d, a cumulative picture cell value writer 104e, and a cumulative picture cell value saving line buffer 104f.

(Vertical picture cell shift amount calculator)

The vertical picture cell shift amount calculator 104a calculates, based on the vertical reduction rate, the shift amount of each of the plurality of picture cells in the vertical direction for reducing the picture image data in the vertical direction. The same vertical shift amount is applied to the plurality of picture cells. That is, in reduction in the vertical direction, a partial picture cell shift amount is common among all the pixels of one line, and therefore, a coefficient is fixed for each line.

(Vertical shift picture cell value calculator)

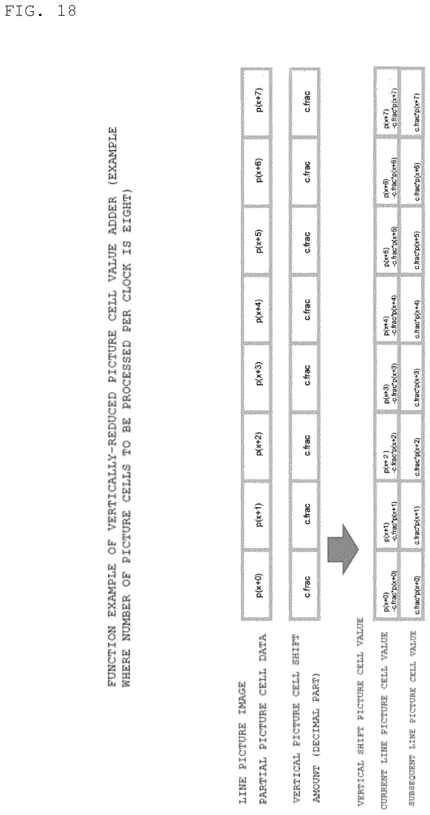

FIG. 18 is a diagram showing a function example of the vertical shift picture cell value calculator 104b. The vertical shift picture cell value calculator 104a calculates a vertical shift picture cell value, which is a picture cell value of each of the plurality of picture cells after shift in the vertical direction, based on a picture cell value of each of the plurality of picture cells of the partial picture image (line picture image partial picture cell data) and the vertical shift amount. The vertical shift picture cell value calculator 104b also substantially serves as a vertical picture cell shifter. The vertical picture cell shifter shifts each of the plurality of picture cells, for which the vertical shift picture cell values have been calculated and which has been arrayed in the horizontal direction, in the vertical direction based on the vertical shift amount of the picture cell.

(Former line cumulative picture cell value reader and cumulative picture cell value saving line buffer)

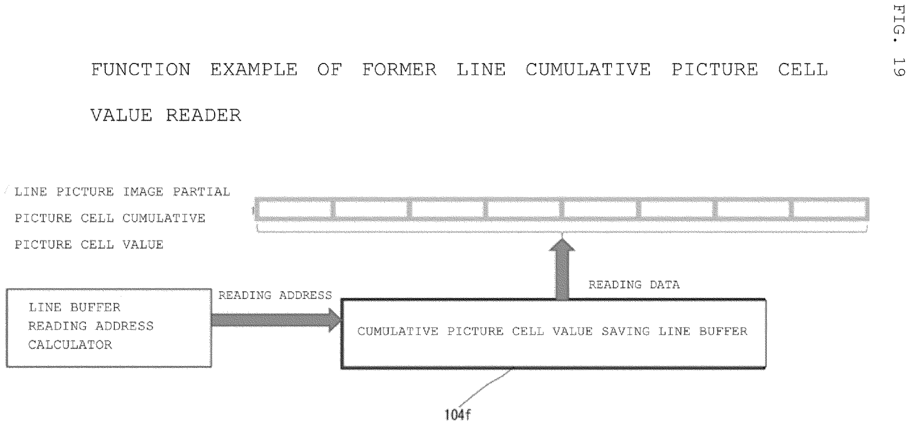

FIG. 19 is a view showing a function example of the former line cumulative picture cell value reader 104d. The former line cumulative picture cell value reader 104d has a line buffer reading address calculator. The former line cumulative picture cell value reader 104d sends a reading address, which has been calculated by the line buffer reading address calculator, to the cumulative picture cell value saving line buffer 104f, and as a line picture image partial picture cell cumulative picture cell value, reads a cumulative picture cell value assigned to the reading address among cumulative picture cell values saved in the cumulative picture cell value saving line buffer 104f.

Specifically, the cumulative picture cell value saving line buffer 104f stores cumulative picture cell values being currently computed before the line being currently processed. The cumulative picture cell value saving line buffer 104f has a capacity for two lines, and a reading source line buffer is switched according to the type of image sensor. In a case where the picture image data output from the image sensor is the black-and-white picture image, only one of the two lines is used. In a case where the picture image data output from the image sensor is the color picture image, the two lines are alternately used for reduction of the Bayer array in the two colors. This is a circuit configuration characteristic which is not found in the related art.

(Function example of vertical shift picture cell value adder)

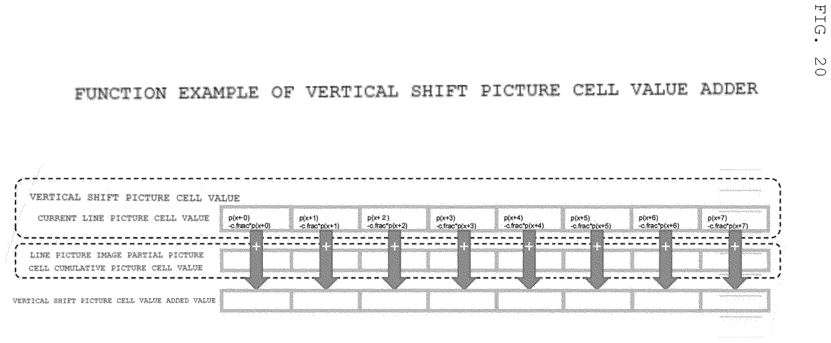

FIG. 20 is a diagram showing a function example of the vertical shift picture cell value adder 104c. The vertical shift picture cell value adder 104c adds up, for each picture cell position in the vertical direction, the vertical shift picture cell values of the plurality of picture cells shifted in the vertical direction. Specifically, the vertical shift picture cell value adder 104c adds up the current line picture cell value of the vertical shift picture cell values and the cumulative value read from the cumulative picture cell value saving line buffer 104f, thereby calculating a vertical shift picture cell value added value. In this manner, reduced picture image accumulation is performed. In a case where a subsequent line picture cell value of the vertical shift picture cell values is valid, the reduced picture image is completed by computation of the current line picture cell value, and therefore, an accumulator output including the vertical shift picture cell value added value is output as a valid reduced line picture image. Such operation may be a characteristic of the present embodiment, which is not found in the related art. Finally, vertically- and horizontally-reduced picture image data is output as an output picture image from the vertical shift picture cell value adder 104c.

(Function example of cumulative picture cell value writer)

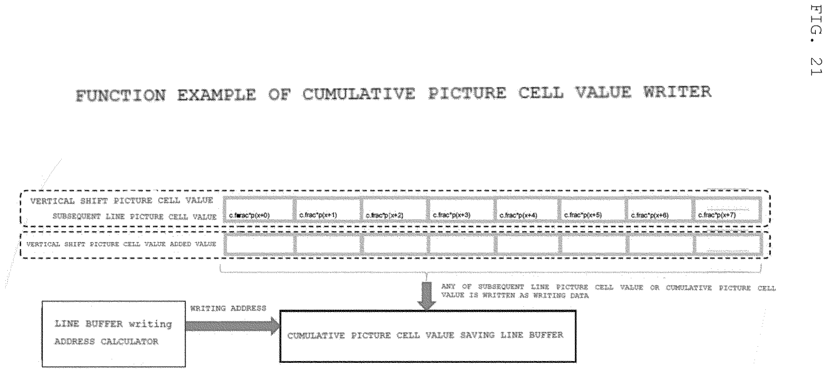

FIG. 21 is a diagram showing a function example of the cumulative picture cell value writer 104e. The cumulative picture cell value writer 104e has a line buffer writing address calculator. The cumulative picture cell value writer 104e sends a writing address, which has been calculated by the line buffer writing address calculator, to the cumulative picture cell value saving line buffer 104f, and stores the writing address in association with the subsequent line picture cell value or the cumulative picture cell value in the cumulative picture cell value saving line buffer 104f.

Specifically, in a case where the subsequent line picture cell value of the vertical shift picture cell values is invalid, the reduced picture image is not completed only by computation of the current line picture cell value, and therefore, the cumulative picture cell value writer 104e stores the accumulator output side in the cumulative picture cell value saving line buffer 104f, and waits for a subsequent line input. In a case where the subsequent line picture cell value of the vertical shift picture cell values is valid, the cumulative picture cell value writer 104e stores the subsequent line picture cell value in the cumulative picture cell value saving line buffer 104f, and waits for accumulation of the subsequent line input. Such operation is also a characteristic of the present embodiment, which is not found in the related art.

<<Operation example of picture image processing apparatus>>

(Color mode)

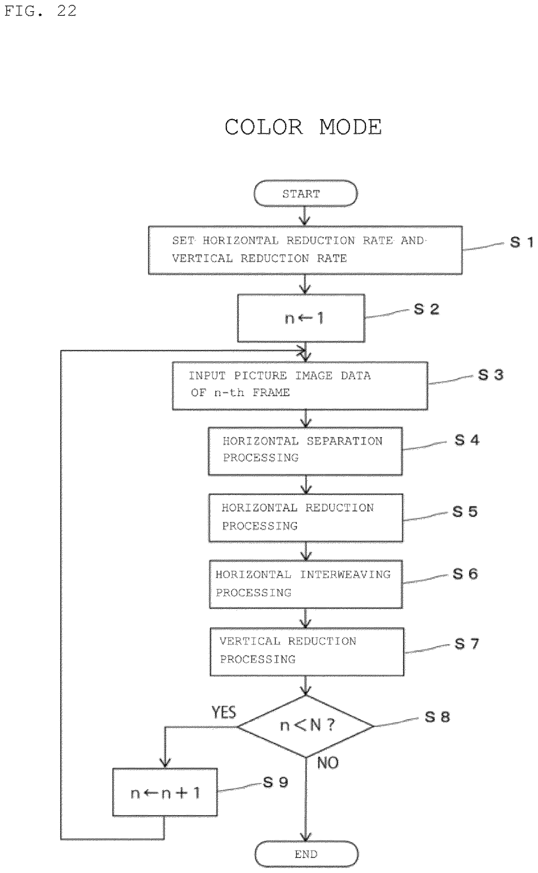

Hereinafter, an operation example of the picture image processing apparatus 10 in a color mode will be described with reference to FIG. 22. The color mode is executed when the Bayer array picture image data is output from the image sensor. A flowchart of FIG. 22 corresponds to a processing algorithm to be executed by a controller (e.g., CPU) included in the picture image processing apparatus 10.

Initially in Step S1, the vertical and horizontal reduction rates specified by the user are set to the circuit device 100, and the internal coefficient of the circuit device 100 is initialized.

Subsequently, in Step S2, 1 is set to n.

Subsequently, in Step S3, picture image data of an n-th frame is input. Specifically, picture image data of an n-th frame from the image sensor is input to the circuit device 100. The picture image data of the n-th frame from the image sensor is input to the circuit from the upper line to the lower line in a unit of a line, and picture cells are sequentially input to the circuit device 100 from the leftmost picture cell to the rightmost picture cell of each line. For each clock of the circuit device 100, several picture cells (pixels) (e.g., eight pixels) are input to the circuit device 100.

Subsequently, in Step S4, the horizontal separation processing is performed. Specifically, the horizontal separation circuit 101 converts the picture image data into color-separated picture image data.

Subsequently, in Step S5, the horizontal reduction processing is performed. Specifically, the horizontal reduction circuit 102 reduces the color-separated picture image data in the horizontal direction. More specifically, the horizontal shift picture cell value calculator 102b first divides a luminance value so that eight picture cells being currently processed can be integrated upon reduced pixel calculation. Subsequently, the horizontal picture cell shifter 102c shifts the divided luminance value to a corresponding pixel position of a reduced pixel. Subsequently, the horizontal shift picture cell value adder 102d calculates a cumulative value of the reduced pixel being currently processed. Subsequently, the horizontally-reduced picture image data former 102e outputs the reduced pixel, for which computation has been completed, from the circuit, and for the reduced pixel for which computation is not completed yet, stores such a reduced pixel in the internal buffer so that the reduced pixel can be processed together with a subsequent sensor output pixel. Subsequently, the coefficient required for reduction in the horizontal direction is updated, and the subsequent sensor pixel processing is continued.

Subsequently, in Step S6, the horizontal interweaving processing is performed. Specifically, the horizontal interweaving circuit 103 interweaves the picture image data reduced and color-separated in the horizontal direction into Bayer array picture image data.

Subsequently, in Step S7, the vertical reduction processing is performed. Specifically, the vertical reduction circuit 104 reduces the Bayer array picture image data, which has been reduced in the horizontal direction, in the vertical direction. Specifically, the vertical shift picture cell value calculator 104b first divides a luminance value so that eight pixels being currently processed can be integrated upon reduced pixel calculation. At the same time, the former line cumulative picture cell value reader 104d reads, from the line buffer, a cumulative value obtained until the previous line. Subsequently, the vertical shift picture cell value adder 104c calculates the cumulative value of the reduced pixel being currently processed, and in a case where computation for reduction has been completed, the cumulative value is output as a reduced pixel from the circuit. In a case where computation is not completed yet, such a pixel is stored in the line buffer so that the pixel can be processed together with a subsequent sensor output pixel. Subsequently, the coefficient required for reduction in the horizontal direction is updated, and the subsequent sensor output pixel processing is continued.

Subsequently, in Step S8, it is determined whether n < N (N is a total frame number (natural number)) is satisfied. When it is determined as yes, the processing transitions to Step S9. When it is determined as no, the flow ends.

In Step S9, n is incremented. After Step S9 has been executed, the processing returns to Step S3.

(Black-and-white mode)

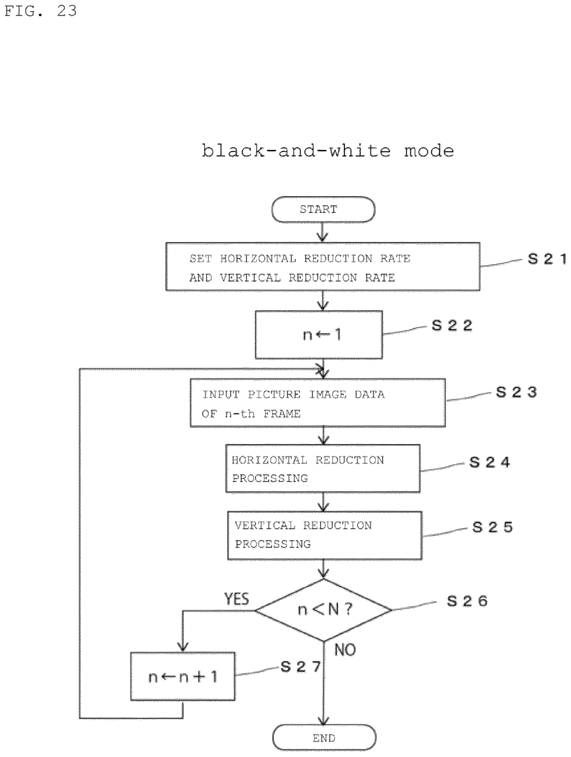

Hereinafter, an operation example of the picture image processing apparatus 10 in a black-and-white mode will be described with reference to Fig. 23. The black-and-white mode is executed when Bayer array picture image data is output from the image sensor. A flowchart of FIG. 23 corresponds to a processing algorithm to be executed by the controller (e.g., CPU) included in the picture image processing apparatus 10.

As shown in FIG. 23, the black-and-white mode is performed in a manner similar to that of the color mode shown in FIG. 22, except that the horizontal separation processing and the horizontal interweaving processing are not executed. That is, Steps S21, S22, S23, S24, S25, S26, S27 of FIG. 23 each correspond to Steps S1, S2, S3, S5, S7, S8, S9 of FIG. 22.

<<Effects of picture image processing apparatus and picture image processing method>>

The picture image processing apparatus 10 according to the first embodiment as described above includes the circuit device 100 having the horizontal reduction circuit 102 that reduces the input picture image data in the horizontal direction at the specified horizontal reduction rate and the vertical reduction circuit 104 that reduces the input picture image data in the vertical direction at the specified vertical reduction rate.

In the picture image processing apparatus 10, the input picture image data can be reduced in the horizontal direction at the specified horizontal reduction rate, and can be reduced in the vertical direction at the specified vertical reduction rate. With this configuration, the input picture image data can be reduced independently in the vertical direction and the horizontal direction. Thus, according to the picture image processing apparatus 10, the picture image processing apparatus capable of improving the degree of freedom in picture image data reduction can be provided.

The circuit device 100 reduces the picture image data in the horizontal direction by the horizontal reduction circuit 102, and reduces the picture image data, which has been reduced in the horizontal direction, in the vertical direction by the vertical reduction circuit 104. With this configuration, picture image data reduction can be completed in the circuit device 100, and even if a circuit device that performs other types of picture image processing is additionally mounted in the picture image processing apparatus 10, picture image reduction can be implemented only by connecting such a circuit device and the circuit device 100 in series.

The picture image data is input to the horizontal reduction circuit 102 in a unit of a picture cell group including a plurality of picture cells arrayed in the horizontal direction. The horizontal reduction circuit 102 includes the horizontal picture cell shift amount calculator 102a that calculates, based on the horizontal reduction rate, the shift amount of each of the plurality of picture cells in the horizontal direction for reducing the picture image data in the horizontal direction, the horizontal shift picture cell value calculator 102b that calculates the horizontal shift picture cell value, which is the picture cell value of each of the plurality of picture cells after shift in the horizontal direction, based on the picture cell value of each of the plurality of picture cells and the horizontal shift amount, the horizontal picture cell shifter 102c that shifts each of the plurality of picture cells, for which the horizontal shift picture cell values have been calculated and which has been arrayed in the vertical direction, in the horizontal direction based on the horizontal shift amount of the picture cell, the horizontal shift picture cell value adder 102d that adds up the horizontal shift picture cell values of the plurality of picture cells shifted in the horizontal direction for each picture cell position in the horizontal direction, and the horizontally-reduced picture image data former 102e that forms, using the horizontal shift picture cell value addition results, the horizontally-reduced picture image data obtained by reducing the picture image data in the horizontal direction. With this configuration, the picture image data can be reduced in the horizontal direction at an arbitrary reduction rate (reduction rate whose inverse is an integer or a non-integer).

The horizontal shift picture cell value calculator 102b divides the picture cell value of each of the plurality of picture cells based on the horizontal reduction rate, and as the horizontal shift picture cell value, outputs the added value obtained by addition of the picture cell value corresponding to the picture cell after shift in the horizontal direction among the divided values. With this configuration, the horizontal shift picture cell value can be easily calculated with high accuracy.

The horizontally-reduced picture image data is input to the vertical reduction circuit in a unit of a picture cell group including a plurality of picture cells arrayed in the horizontal direction. The vertical reduction circuit 104 includes the vertical picture cell shift amount calculator 104a that calculates, based on the vertical reduction rate, the shift amount of each of the plurality of picture cells in the vertical direction for reducing the picture image data in the vertical direction, the vertical shift picture cell value calculator 104b that calculates the vertical shift picture cell value, which is the picture cell value of each of the plurality of picture cells after shift in the vertical direction, based on the picture cell value of each of the plurality of picture cells and the vertical shift amount, the vertical picture cell shifter that shifts each of the plurality of picture cells, for which the vertical shift picture cell values have been calculated and which have been arrayed in the horizontal direction, in the vertical direction based on the vertical shift amount of the picture cell, and the vertical shift picture cell value adder 104c that adds up the vertical shift picture cell values of the plurality of picture cells shifted in the vertical direction for each picture cell position in the vertical direction. With this configuration, the picture image data can be reduced in the vertical direction at an arbitrary reduction rate (reduction rate whose inverse is an integer or a non-integer).

The same vertical shift amount is applied to the plurality of picture cells. With this configuration, the amount of computation required for reducing the picture image data in the vertical direction can be reduced.

The horizontal reduction circuit 102 includes the multiplier, the adder, and the register. With this configuration, the picture image data can be reduced in the horizontal direction with a simple circuit configuration, and the implementation cost can be reduced.

The vertical reduction circuit 104 includes the multiplier, the adder, and the line buffer. With this configuration, the picture image data can be reduced in the vertical direction with a simple circuit configuration, and the implementation cost can be reduced.

The horizontal reduction circuit 102 can reduce the picture image data in the horizontal direction at the horizontal reduction rate whose inverse is not an integer. With this configuration, the degree of freedom in selection of the horizontal reduction rate can be improved.

The vertical reduction circuit 104 can reduce the picture image data in the vertical direction at the vertical reduction rate whose inverse is not an integer. With this configuration, the degree of freedom in selection of the vertical reduction rate can be improved.

Different values can be specified as the horizontal reduction rate and the vertical reduction rate. With this configuration, the degree of freedom in a combination of the horizontal reduction rate and the vertical reduction rate can be improved.

The same value can be specified as the horizontal reduction rate and the vertical reduction rate. This also allows vertical and horizontal reduction at the same rate.

The circuit device 100 further includes the horizontal separation circuit 101 that color-separates the Bayer array picture image data in the horizontal direction and the horizontal interweaving circuit 103 that interweaves the picture image data, which has been processed via the horizontal separation circuit 101, in the horizontal direction. The circuit device 100 color-separates the Bayer array picture image data in the horizontal direction by the horizontal separation circuit 101, reduces the color-separated picture image data in the horizontal direction by the horizontal reduction circuit 102, and interweaves the picture image data, which has been color-separated and reduced in the horizontal direction, in the horizontal direction by the horizontal interweaving circuit 103. With this configuration, the Bayer array picture image data can be efficiently reduced vertically and horizontally with favorable reproducibility.

The picture image processing method performed using the picture image processing apparatus 10 according to the first embodiment includes a step of reducing the input picture image data in the horizontal direction at the specified horizontal reduction rate and a step of reducing the picture image data, which has been reduced in the horizontal direction, in the vertical direction at the specified vertical reduction rate.

In the picture image processing method, the input picture image data can be reduced in the horizontal direction at the specified horizontal reduction rate, and can be reduced in the vertical direction at the specified vertical reduction rate. With this configuration, the input picture image data can be reduced independently in the vertical direction and the horizontal direction. Thus, according to the picture image processing method, the degree of freedom in picture image data reduction can be improved.

<2. Imaging apparatus according to second embodiment of present invention>

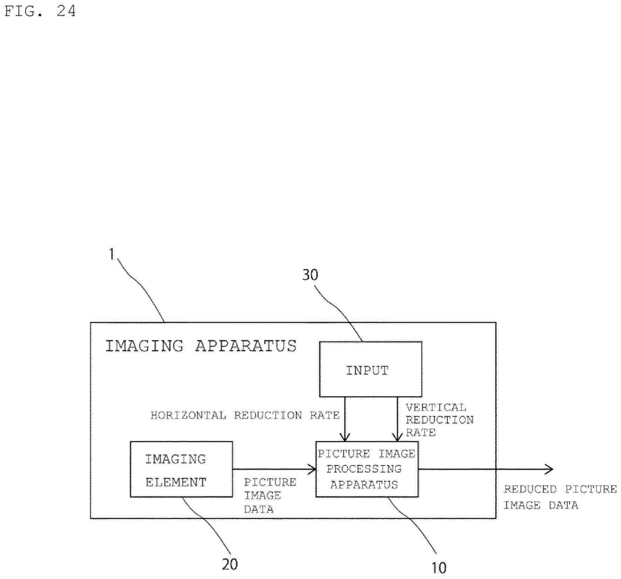

Hereinafter, an imaging apparatus 1 (camera) according to a second embodiment of the present invention will be described with reference to FIG. 24. As shown in FIG. 24, the imaging apparatus 1 includes an imaging element 20 that images an object and outputs picture image data on the picture image of the object and the picture image processing apparatus 10 according to the first embodiment, that processes the picture image data output from the imaging element 20. The imaging apparatus 1 further includes an input 30 (e.g., user interface) with which a user inputs a horizontal reduction rate and a vertical reduction rate.

According to the imaging apparatus 1, an imaging apparatus having an imaging function, a picture image reduction function, and a reduction rate input function can be provided.

<3. Imaging apparatus according to third embodiment of present invention>

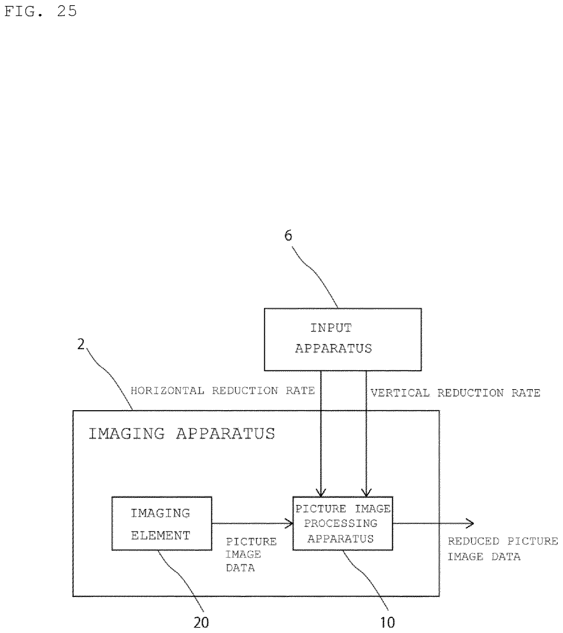

Hereinafter, an imaging apparatus 2 (camera) according to a third embodiment of the present invention will be described with reference to FIG. 25. As shown in FIG. 25, the imaging apparatus 2 includes the imaging element 20 that images an object and outputs picture image data on the picture image of the object and the picture image processing apparatus 10 according to the first embodiment, that processes the picture image data output from the imaging element 20. The picture image processing apparatus 10 is connected in a wireless or wired manner to an input apparatus 6 (for example, personal computer or smartphone) with which a user inputs a horizontal reduction rate and a vertical reduction rate.

According to the imaging apparatus 2, an imaging apparatus having an imaging function and a picture image reduction function and being capable of receiving the vertical and horizontal reduction rates via the input apparatus 6 can be provided.

<4. Imaging apparatus according to fourth embodiment of present invention>

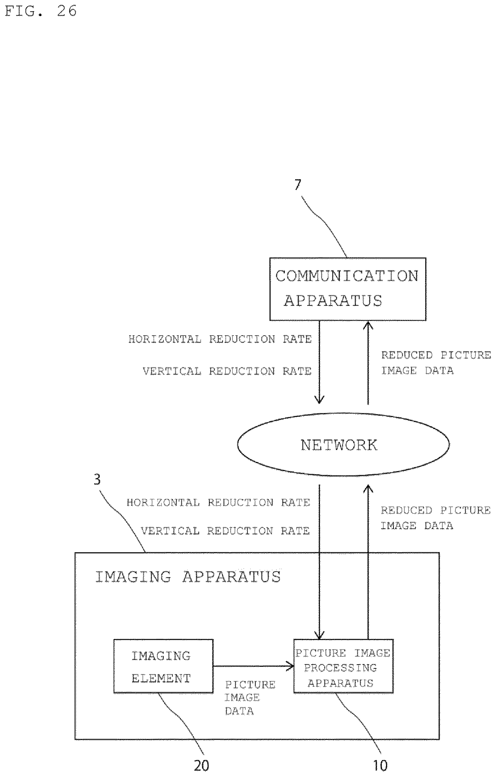

Hereinafter, an imaging apparatus 3 (camera) according to a fourth embodiment of the present invention will be described with reference to FIG. 26. As shown in FIG. 26, the imaging apparatus 3 includes the imaging element 20 that images an object and outputs picture image data on the picture image of the object and the picture image processing apparatus 10 according to the first embodiment, that processes the picture image data output from the imaging element 20. The picture image processing apparatus 10 is connected, via a network (for example, LAN or WAN), to a communication apparatus 7 (for example, personal computer or smartphone) including an input with which a user inputs a horizontal reduction rate and a vertical reduction rate.

According to the imaging apparatus 3, an imaging apparatus having an imaging function and a picture image reduction function and being capable of receiving the vertical and horizontal reduction rates via the communication apparatus 7 and the network and providing reduced picture image data via the communication apparatus 7 and the network can be provided.

<5. Imaging apparatus system according to fifth embodiment of present invention>

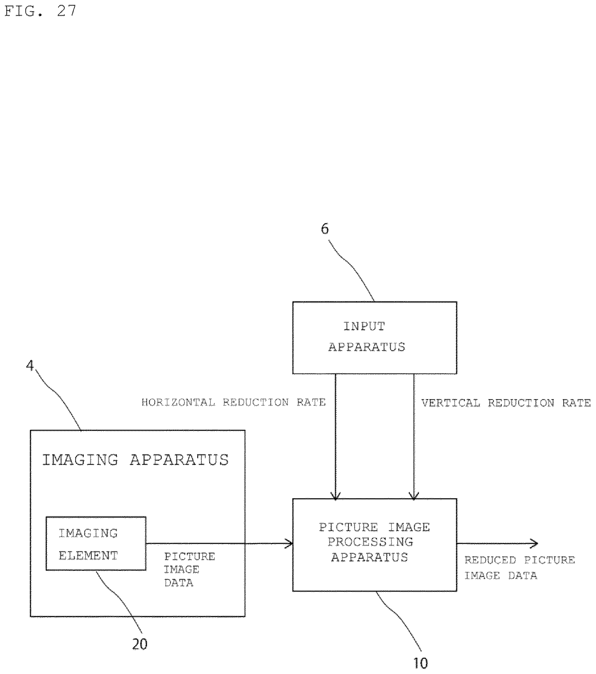

Hereinafter, an imaging system according to a fifth embodiment of the present invention will be described with reference to FIG. 27. As shown in FIG. 27, the imaging system according to the fifth embodiment includes an imaging apparatus 4 (camera) having the imaging element 20 that images an object and outputs picture image data on the picture image of the object and the picture image processing apparatus 10 according to the first embodiment, that processes the picture image data output from the imaging element 20 of the imaging apparatus 4. The picture image processing apparatus 10 is connected in a wireless or wired manner to the input apparatus 6 (for example, personal computer or smartphone) with which a user inputs a horizontal reduction rate and a vertical reduction rate.

According to the imaging system of the fifth embodiment, an imaging system separately having the imaging apparatus 4 and the picture image processing apparatus 10 and being capable of receiving the vertical and horizontal reduction rates by the picture image processing apparatus 10 via the input apparatus 6 can be provided.

<6. Imaging apparatus system according to sixth embodiment of present invention>

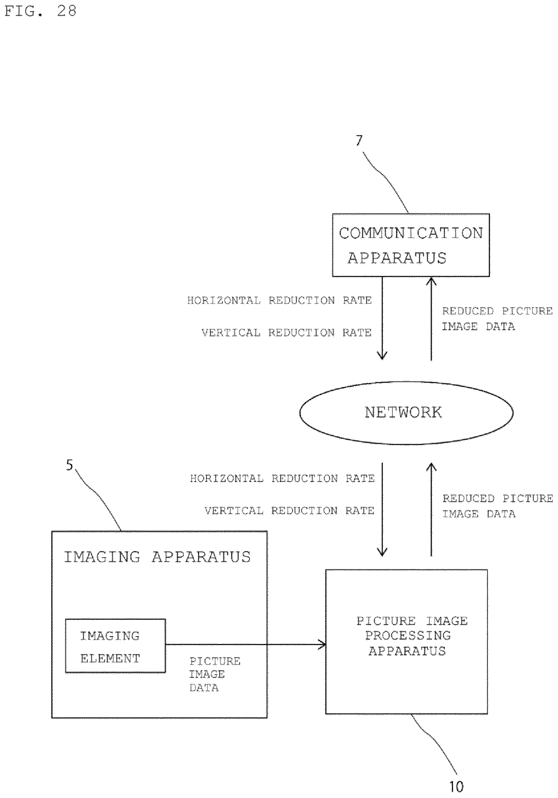

Hereinafter, an imaging apparatus system according to a sixth embodiment of the present invention will be described with reference to FIG. 28. As shown in FIG. 28, the imaging apparatus system according to the sixth embodiment includes an imaging apparatus 5 (camera) having the imaging element 20 that images an object and outputs picture image data on the picture image of the object and the picture image processing apparatus 10 according to the first embodiment, that processes the picture image data output from the imaging element 20 of the imaging apparatus 5. The picture image processing apparatus 10 is connected, via a network (for example, LAN or WAN), to the communication apparatus 7 (for example, personal computer or smartphone) including an input with which a user inputs a horizontal reduction rate and a vertical reduction rate.

According to the imaging system of the sixth embodiment, an imaging system separately having the imaging apparatus 5 and the picture image processing apparatus 10 and being capable of receiving the vertical and horizontal reduction rates by the imaging apparatus 5 via the communication apparatus 7 and the network and providing reduced picture image data via the communication apparatus 7 and the network can be provided.

<7. Modifications of present invention>

The present invention is not limited to each of the above-described embodiments, and various modifications can be made thereto.

For example, in a case where only the black-and-white picture image is targeted for the processing, the picture image processing apparatus does not necessarily have the horizontal separation circuit and the horizontal interweaving circuit.

Reference Signs List

    1, 2, 3, 4, 5: Imaging apparatus
    10: Picture image processing apparatus
    20: Imaging element
    30: Input
    100: Circuit device
    101: Horizontal separation circuit
    102: Horizontal reduction circuit
    102a: Horizontal picture cell shift amount calculator
    102b: Horizontal shift picture cell value calculator
    102c: Horizontal picture cell shifter

102d: Horizontal shift picture cell value adder
102e: Horizontally-reduced picture image data former
103: Horizontal interweaving circuit
104: Vertical reduction circuit
104a: Vertical picture cell shift amount calculator
104b: Vertical shift picture cell value calculator
104c: Vertical shift picture cell value adder

**Claims**

1. A picture image processing apparatus comprising:

   a circuit device having
   a horizontal reduction circuit that reduces input picture image data in a horizontal direction at a specified horizontal reduction rate, and
   a vertical reduction circuit that reduces input picture image data in a vertical direction at a specified vertical reduction rate.

2. The picture image processing apparatus according to claim 1, wherein
   the circuit device reduces the picture image data in the horizontal direction by the horizontal reduction circuit, and reduces the picture image data, which has been reduced in the horizontal direction, in the vertical direction by the vertical reduction circuit.

3. The picture image processing apparatus according to claim 2, wherein

   the picture image data is input to the horizontal reduction circuit in a unit of a picture cell group including a plurality of picture cells arrayed in the horizontal direction, and
   the horizontal reduction circuit includes
   a horizontal picture cell shift amount calculator that calculates, based on the horizontal reduction rate, a shift amount of each of the plurality of picture cells in the horizontal direction for reducing the picture image data in the horizontal direction,
   a horizontal shift picture cell value calculator that calculates a horizontal shift picture cell value, which is a picture cell value of each of the plurality of picture cells after shift in the horizontal direction, based on a picture cell value of each of the plurality of picture cells and the horizontal shift amount,
   a horizontal picture cell shifter that shifts each of the plurality of picture cells, for which the horizontal shift picture cell values have been calculated and which has been arrayed in the vertical direction, in the horizontal direction based on the horizontal shift amount of the picture cell,
   a horizontal shift picture cell value adder that adds up the horizontal shift picture cell values of the plurality of picture cells shifted in the horizontal direction for each picture cell position in the horizontal direction, and
   a horizontally-reduced picture image data former that forms, using a horizontal shift picture cell value addition result, horizontally-reduced picture image data obtained by reducing the picture image data in the horizontal direction.

4. The picture image processing apparatus according to claim 3, wherein
   the horizontal shift picture cell value calculator divides the picture cell value of each of the plurality of picture cells based on the horizontal reduction rate, and as the horizontal shift picture cell value, outputs an added value obtained by addition of a picture cell value corresponding to a picture cell after shift in the horizontal direction among the divided values.

5. The picture image processing apparatus according to claim 3 or 4, wherein

   the horizontally-reduced picture image data is input to the vertical reduction circuit in a unit of a picture cell group including a plurality of picture cells arrayed in the horizontal direction, and
   the vertical reduction circuit includes
   a vertical picture cell shift amount calculator that calculates, based on the vertical reduction rate, a shift amount of each of the plurality of picture cells in the vertical direction for reducing the picture image data in the vertical direction,

a vertical shift picture cell value calculator that calculates a vertical shift picture cell value, which is a picture cell value of each of the plurality of picture cells after shift in the vertical direction, based on a picture cell value of each of the plurality of picture cells and the vertical shift amount,

a vertical picture cell shifter that shifts each of the plurality of picture cells, for which the vertical shift picture cell values have been calculated and which has been arrayed in the horizontal direction, in the vertical direction based on the vertical shift amount of the picture cell, and

a vertical shift picture cell value adder that adds up the vertical shift picture cell values of the plurality of picture cells shifted in the vertical direction for each picture cell position in the vertical direction.

6. The picture image processing apparatus according to claim 5, wherein
an identical vertical shift amount is applied to the plurality of picture cells.

7. The picture image processing apparatus according to any one of claims 1 to 6, wherein
the horizontal reduction circuit includes a multiplier, an adder, and a register.

8. The picture image processing apparatus according to any one of claims 1 to 7, wherein
the vertical reduction circuit includes a multiplier, an adder, and a line buffer.

9. The picture image processing apparatus according to any one of claims 1 to 8, wherein
the horizontal reduction circuit is able to reduce the picture image data in the horizontal direction at the horizontal reduction rate whose inverse is not an integer.

10. The picture image processing apparatus according to any one of claims 1 to 9, wherein
the vertical reduction circuit is able to reduce the picture image data in the vertical direction at the vertical reduction rate whose inverse is not an integer.

11. The picture image processing apparatus according to any one of claims 1 to 10, wherein
different values are able to be specified as the horizontal reduction rate and the vertical reduction rate.

12. The picture image processing apparatus according to any one of claims 1 to 11, wherein
an identical value is able to be specified as the horizontal reduction rate and the vertical reduction rate.

13. The picture image processing apparatus according to any one of claims 1 to 12, wherein

the circuit device further includes
a horizontal separation circuit that color-separates Bayer array picture image data in the horizontal direction, and
a horizontal interweaving circuit that interweaves the picture image data, which has been processed via the horizontal separation circuit, in the horizontal direction, and
the circuit device color-separates the Bayer array picture image data in the horizontal direction by the horizontal separation circuit, reduces the color-separated picture image data in the horizontal direction by the horizontal reduction circuit, and interweaves the picture image data, which has been color-separated and reduced in the horizontal direction, in the horizontal direction by the horizontal interweaving circuit.

14. An imaging apparatus comprising:

an imaging element that images an object and outputs picture image data on a picture image of the object; and
the picture image processing apparatus according to any one of claims 1 to 13, that processes the picture image data output from the imaging element.

15. The imaging apparatus according to claim 14, further comprising:
an input with which a user inputs the horizontal reduction rate and the vertical reduction rate.

16. A picture image processing method comprising:

a step of reducing input picture image data in a horizontal direction at a specified horizontal reduction rate; and
a step of reducing the picture image data, which has been reduced in the horizontal direction, in a vertical direction at a specified vertical reduction rate.

FIG. 1

STATE OF MONAURAL PICTURE IMAGE IN CONVENTIONAL 2 × 2 BINNING

(= REDUCTION RATE OF 0.5)

**Sensor output**
E(x,y) is the pixel value (energy) of the sensor pixel cell at the location (x,y)

| E(0,0) | E(0,1) | E(0,2) | E(0,3) | ... |
| E(1,0) | E(1,1) | E(1,2) | E(1,3) | ... |
| E(2,0) | E(2,1) | E(2,2) | E(2,3) | ... |
| E(3,0) | E(3,1) | E(3,2) | E(3,3) | ... |
| ... | ... | ... | ... | |

$P(0,0) = E(0,0) + E(0,1) + E(1,0) + E(1,1)$ (ADDITION mode)

$P(0,0) = \{E(0,0) + E(0,1) + E(1,0) + E(1,1)\} / (2 \times 2)$ (AVERAGE mode)

BINNING PROCESSING

**Camera output**
P(x,y) is the pixel value of the camera output (CoaXPress, GigEVision, PMCL, etc.)

| P(0,0) | P(0,1) | ... |
| P(1,0) | P(1,1) | ... |
| ... | ... | |

FIG. 2

EP 4 440 095 A1

MONAURAL PICTURE IMAGE REDUCTION (REDUCTION RATE OF 2/3 = 0.6666... BOTH IN VERTICAL AND HORIZONTAL DIRECTIONS)

| E(0,0) | E( ,1) | E(0,2) | E(0,3) |
| E(1,0) | E( ,1) | E(1,2) | E(1,3) | · · · |
| E(2,0) | E( ,1) | E(2,2) | E(2,3) | · · · |
| E(3,0) | E(3,1) | E(3,2) | E(3,3) | · · · |

$P(0,0) = E(0,0) + E(0,1)/2 + E(1,0)/2 + E(1,1)/4$ (ADDITION mode)

$P(0,0) = \{E(0,0) + E(0,1)/2 + E(1,0)/2 + E(1,1)/4\} / (1.5 \times 1.5)$ (AVERAGE mode)

PICTURE IMAGE REDUCTION PROCESSING

| P(0,0) | P(0,1) | · · · |
| P(1,0) | P(1,1) | · · · |

## Sensor output

E(x,y) is the pixel value (energy) of the sensor pixel cell at the location (x,y)

## Camera output

P(x,y) is the pixel value of the camera output (CoaXPress, GigEVision, PMCL, etc.)

EP 4 440 095 A1

FIG. 3

CONFIGURATION EXAMPLE OF PICTURE IMAGE PROCESSING APPARATUS

FIG. 4

EP 4 440 095 A1

FIG. 5

BAYER PICTURE IMAGE REDUCTION METHOD IMAGE

23

FIG. 6

FUNCTION EXAMPLE OF HORIZONTAL SEPARATION CIRCUIT

BAYER ARRAY LINE PICTURE IMAGE

COLOR-SEPARATED LINE PICTURE IMAGE

FIG. 7

# CONFIGURATION EXAMPLE OF HORIZONTAL REDUCTION CIRCUIT

HORIZONTAL REDUCTION RATE

102a

102

HORIZONTAL PICTURE CELL SHIFT AMOUNT CALCULATOR

LINE PICTURE IMAGE PARTIAL PICTURE CELL DATA

| HORIZONTAL SHIFT PICTURE CELL VALUE CALCULATOR | HORIZONTAL PICTURE CELL SHIFTER | HORIZONTAL SHIFT PICTURE CELL VALUE ADDER | HORIZONTALLY-REDUCED PICTURE IMAGE DATA FORMER |

HORIZONTALLY-REDUCED PICTURE IMAGE DATA

102b    102c    102d    102e

FIG. 8

EP 4 440 095 A1

OPERATION EXAMPLE OF HORIZONTAL SHIFT PICTURE CELL VALUE
CALCULATOR (EXAMPLE WHERE NUMBER OF PICTURE CELLS TO BE
PROCESSED PER CLOCK IS EIGHT)

LINE PICTURE IMAGE PARTIAL
PICTURE CELL DATA

| p(x+0) | p(x+1) | p(x+2) | p(x+3) | p(x+4) | p(x+5) | p(x+6) | p(x+7) |

HORIZONTAL PICTURE CELL
SHIFT AMOUNT (DECIMAL PART)

| c(x+0).frac | c(x+1).frac | c(x+2).frac | c(x+3).frac | c(x+4).frac | c(x+5).frac | c(x+6).frac | c(x+7).frac |

PLURALITY OF PICTURE CELLS
FOR WHICH HORIZONTAL SHIFT
PICTURE CELL VALUES HAVE
BEEN CALCULATED AND WHICH
HAS BEEN ARRAYED IN
VERTICAL DIRECTION

| p(x+0)<br>-c(x+0).frac*p(x+0) | c(x+0).frac*p(x+0) |
|---|---|
| p(x+1)<br>-c(x+1).frac*p(x+1) | c(x+1).frac*p(x+1) |
| p(x+2)<br>-c(x+2).frac*p(x+2) | c(x+2).frac*p(x+2) |
| p(x+3)<br>-c(x+3).frac*p(x+3) | c(x+3).frac*p(x+3) |
| p(x+4)<br>-c(x+4).frac*p(x+4) | c(x+4).frac*p(x+4) |
| p(x+5)<br>-c(x+5).frac*p(x+5) | c(x+5).frac*p(x+5) |
| p(x+6)<br>-c(x+6).frac*p(x+6) | c(x+6).frac*p(x+6) |
| p(x+7)<br>-c(x+7).frac*p(x+7) | c(x+7).frac*p(x+7) |

METHOD (1) OF CALCULATING INCOMPLETE PIXEL VALUE

FIG. 9

FIG. 10

METHOD (2) OF CALCULATING INCOMPLETE PIXEL VALUE

| UNIT pixel | SENSOR OUTPUT 1.25 pixel | SENSOR OUTPUT 1.25 pixel | SENSOR OUTPUT 1.25 pixel | SENSOR OUTPUT 1.25 pixel | SENSOR OUTPUT 1.25 pixel | SENSOR OUTPUT 1.25 pixel | SENSOR OUTPUT 1.25 pixel | SENSOR OUTPUT 1.2 pixel | |
|---|---|---|---|---|---|---|---|---|---|
| | 1.0 px 0.25px | 0.75px 0.5px | 0.5px 0.75px | 0.75px 0.25px | 1.0px | 1.0 px 0.25px | 0.75px 0.5px | 0.5px 0.75px | |
| SENSOR OUTPUT PIXEL | E(0,0) | E(0,1) | E(0,2) | E(0,3) | E(0,4) | E(0,5) | E(0,6) | E(0,7) | ... |
| REDUCED PIXEL | P(0,0) | P(0,1) | P(0,2) | P(0,3) | P(0,4) | P(0,5) | P(0,6) | P(0,7) | ... |

FIG. 11

METHOD (3) OF CALCULATING INCOMPLETE PIXEL VALUE

FIG. 12

EP 4 440 095 A1

SENSOR OUTPUT PIXEL SHIFT AMOUNT AND TOTAL SHIFT AMOUNT WITH

REFERENCE TO REDUCED PIXEL

EXAMPLE OF SCALE = 0.8 (REDUCED BY 0.8)

    C[x] IN TABLE BELOW IS x-th SHIFT AMOUNT OF SENSOR OUTPUT

    PIXEL IN PROCESSING

    shiftSum IN TABLE BELOW IS TOTAL SHIFT AMOUNT

| | Clock Cycle | C[0] | C[1] | C[2] | C[3] | C[4] | C[5] | C[6] | C[7] | Shift Sum | NUMBER OF COMPLETELY-REDUCED PIXELS | INCOMPLETE SHIFT AMOUNT |
|---|---|---|---|---|---|---|---|---|---|---|---|---|
| Initial | 0 | 0.0 | 0.8 | 1.6 | 2.4 | 3.2 | 4.0 | 4.8 | 5.6 | 6.4 | 6 | 0.4 |
| | 1 | 0.0+0.4 =0.4 | 0.8+0.4 =1.2 | 1.6+0.4 =2.0 | 2.4+0.4 =2.8 | 3.2+0.4 =3.6 | 4.0+0.4 =4.4 | 4.8+0.4 =5.2 | 5.6+0.4 =6.0 | 6.4+0.4 =6.8 | 6 | 0.8 |
| | 2 | 0.0+0.8 =0.8 | 0.8+0.8 =1.6 | 1.6+0.8 =2.4 | 2.4+0.8 =3.2 | 3.2+0.8 =4.2 | 4.0+0.8 =4.8 | 4.8+0.8 =5.6 | 5.6+0.8 =6.4 | 6.4+0.8 =7.2 | 7 | 0.2 |
| | 3 | 0.0+0.2 =0.2 | 0.8+0.2 =1.0 | 1.6+0.2 =1.8 | 2.4+0.2 =2.6 | 3.2+0.2 =3.4 | 4.0+0.2 =4.2 | 4.8+0.2 =5.0 | 5.6+0.2 =5.8 | 6.4+0.2 =6.6 | 6 | 0.6 |
| | 4 | : | : | : | : | : | : | : | : | : | : | : |

FIG. 13

EP 4 440 095 A1

31

FUNCTION EXAMPLE OF HORIZONTAL PICTURE CELL SHIFTER

| | |
|---|---|
| p(x+0)<br>-c(x+0).frac*p(x+0) | c(x+0).frac*p(x+0) |
| p(x+1)<br>-c(x+1).frac*p(x+1) | c(x+1).frac*p(x+1) |
| p(x+2)<br>-c(x+2).frac*p(x+2) | c(x+2).frac*p(x+2) |
| p(x+3)<br>-c(x+3).frac*p(x+3) | c(x+3).frac*p(x+3) |
| p(x+4)<br>-c(x+4).frac*p(x+4) | c(x+4).frac*p(x+4) |
| p(x+5)<br>-c(x+5).frac*p(x+5) | c(x+5).frac*p(x+5) |
| p(x+6)<br>-c(x+6).frac*p(x+6) | c(x+6).frac*p(x+6) |
| p(x+7)<br>-c(x+7).frac*p(x+7) | c(x+7).frac*p(x+7) |

c(x+1).integer
c(x+2).integer
c(x+3).integer
c(x+4).integer
c(x+5).integer
c(x+6).integer
c(x+6).integer

PLURALITY OF PICTURE CELLS FOR WHICH HORIZONTAL SHIFT PICTURE
CELL VALUES HAVE BEEN CALCULATED AND WHICH HAS BEEN ARRAYED IN
VERTICAL DIRECTION

FUNCTION EXAMPLE OF HORIZONTAL SHIFT PICTURE CELL VALUE ADDER

HORIZONTAL SHIFT PICTURE CELL VALUE ADDED VALUE

FOR EACH PICTURE CELL POSITION IN HORIZONTAL DIRECTION, ADD UP HORIZONTAL SHIFT PICTURE CELL VALUES OF PLURALITY OF PICTURE CELLS SHIFTED IN HORIZONTAL DIRECTION

FIG. 14

EP 4 440 095 A1

FIG. 15

FUNCTION EXAMPLE OF HORIZONTALLY-REDUCED PICTURE IMAGE DATA

FORMER

HORIZONTAL SHIFT PICTURE CELL VALUE ADDED VALUE

INTERNAL BUFFER FOR
HORIZONTAL SHIFT PICTURE
CELL OUTPUT VALUE
CALCULATION

HORIZONTAL SHIFT PICTURE
CELL OUTPUT VALUE

NUMBER OF VALID PICTURE CELLS AS REDUCED PICTURE CELL
OUTPUT AND NUMBER OF PICTURE CELLS TO BE WRITTEN BACK
TO INTERNAL BUFFER VARY ACCORDING TO COEFFICIENT

HORIZONTALLY-REDUCED PICTURE IMAGE DATA

PICTURE CELL VALUE WHICH IS NOT OUTPUT
YET AND IS IN MIDDLE OF COMPUTATION
IS WRITTEN BACK TO INTERNAL BUFFER

FUNCTION EXAMPLE OF HORIZONTAL INTERWEAVING CIRCUIT

COLOR-SEPARATED LINE
PICTURE IMAGE AFTER
REDUCTION IN HORIZONTAL
DIRECTION

BAYER ARRAY LINE
PICTURE IMAGE AFTER
REDUCTION IN HORIZONTAL
DIRECTION

FIG. 16

FIG. 17

CONFIGURATION EXAMPLE OF VERTICAL REDUCTION CIRCUIT

104

VERTICAL PICTURE CELL SHIFT AMOUNT CALCULATOR — 104a

VERTICAL SHIFT PICTURE CELL VALUE CALCULATOR — 104b

VERTICAL SHIFT PICTURE CELL VALUE ADDER — 104c

CUMULATIVE PICTURE CELL VALUE WRITER — 104e

FORMER LINE CUMULATIVE PICTURE CELL VALUE READER — 104d

CUMULATIVE PICTURE CELL VALUE SAVING LINE BUFFER — 104f

VERTICAL REDUCTION RATE

LINE PICTURE IMAGE PARTIAL PICTURE CELL DATA

VERTICALLY- AND HORIZONTALLY -REDUCED PICTURE IMAGE DATA

FIG. 18

EP 4 440 095 A1

FUNCTION EXAMPLE OF VERTICALLY-REDUCED PICTURE CELL VALUE ADDER (EXAMPLE WHERE NUMBER OF PICTURE CELLS TO BE PROCESSED PER CLOCK IS EIGHT)

LINE PICTURE IMAGE
PARTIAL PICTURE CELL DATA

| p(x+0) | p(x+1) | p(x+2) | p(x+3) | p(x+4) | p(x+5) | p(x+6) | p(x+7) |

VERTICAL PICTURE CELL SHIFT
AMOUNT (DECIMAL PART)

| c.frac | c.frac | c.frac | c.frac | c.frac | c.frac | c.frac | c.frac |

VERTICAL SHIFT PICTURE CELL VALUE

CURRENT LINE PICTURE CELL VALUE

| p(x+0) -c.frac*p(x+0) | p(x+1) -c.frac*p(x+1) | p(x+2) -c.frac*p(x+2) | p(x+3) -c.frac*p(x+3) | p(x+4) -c.frac*p(x+4) | p(x+5) -c.frac*p(x+5) | p(x+6) -c.frac*p(x+6) | p(x+7) -c.frac*p(x+7) |

SUBSEQUENT LINE PICTURE CELL VALUE

| c.frac*p(x+0) | c.frac*p(x+1) | c.frac*p(x+2) | c.frac*p(x+3) | c.frac*p(x+4) | c.frac*p(x+5) | c.frac*p(x+6) | c.frac*p(x+7) |

FIG. 19

EP 4 440 095 A1

# FUNCTION EXAMPLE OF FORMER LINE CUMULATIVE PICTURE CELL VALUE READER

LINE PICTURE IMAGE PARTIAL PICTURE CELL CUMULATIVE PICTURE CELL VALUE

LINE BUFFER READING ADDRESS CALCULATOR

READING ADDRESS

CUMULATIVE PICTURE CELL VALUE SAVING LINE BUFFER

READING DATA

104f

FIG. 20

FUNCTION EXAMPLE OF VERTICAL SHIFT PICTURE CELL VALUE ADDER

FIG. 21

# FUNCTION EXAMPLE OF CUMULATIVE PICTURE CELL VALUE WRITER

VERTICAL SHIFT PICTURE CELL VALUE
SUBSEQUENT LINE PICTURE CELL VALUE

| c.frac*p(x+0) | c.frac*p(x+1) | c.frac*p(x+2) | c.frac*p(x+3) | c.frac*p(x+4) | c.frac*p(x+5) | c.frac*p(x+6) | c.frac*p(x+7) |

VERTICAL SHIFT PICTURE CELL VALUE ADDED VALUE

ANY OF SUBSEQUENT LINE PICTURE CELL VALUE OR CUMULATIVE PICTURE CELL VALUE IS WRITTEN AS WRITING DATA

LINE BUFFER writing
ADDRESS CALCULATOR

WRITING ADDRESS

CUMULATIVE PICTURE CELL VALUE SAVING LINE BUFFER

FIG. 22

## COLOR MODE

```
                    ┌─────────────┐
                    │    START    │
                    └──────┬──────┘
                           ↓
          ┌──────────────────────────────────────┐
          │ SET HORIZONTAL REDUCTION RATE AND      │──── S 1
          │ VERTICAL REDUCTION RATE                │
          └───────────────────┬──────────────────┘
                              ↓
                    ┌─────────────────┐
                    │      n ← 1       │──── S 2
                    └────────┬────────┘
                             ↓
          ┌──────────────────────────────────┐
          │ INPUT PICTURE IMAGE DATA          │──── S 3
          │ OF n-th FRAME                     │
          └───────────────┬──────────────────┘
                          ↓
            ┌──────────────────────────┐
            │ HORIZONTAL SEPARATION     │──── S 4
            │ PROCESSING                │
            └────────────┬─────────────┘
                         ↓
            ┌──────────────────────────┐
            │ HORIZONTAL REDUCTION      │──── S 5
            │ PROCESSING                │
            └────────────┬─────────────┘
                         ↓
            ┌──────────────────────────┐
            │ HORIZONTAL INTERWEAVING   │──── S 6
            │ PROCESSING                │
            └────────────┬─────────────┘
                         ↓
            ┌──────────────────────────┐
            │ VERTICAL REDUCTION        │──── S 7
            │ PROCESSING                │
            └────────────┬─────────────┘
                         ↓
       YES           ◇─────────◇
     ┌────────────── │ n < N ? │──── S 8
     │               ◇─────────◇
     │                    │ NO
     ↓                    ↓
  ┌─────────┐         ┌─────────┐
  │ n ← n+1 │─ S 9    │   END   │
  └─────────┘         └─────────┘
```

FIG. 23

black-and-white mode

START

SET HORIZONTAL REDUCTION RATE
AND VERTICAL REDUCTION RATE — S21

$n \leftarrow 1$ — S22

INPUT PICTURE IMAGE DATA
OF n-th FRAME — S23

HORIZONTAL REDUCTION
PROCESSING — S24

VERTICAL REDUCTION
PROCESSING — S25

$n < N$ ? — S26

YES

NO

$n \leftarrow n + 1$ — S27

END

FIG. 24

```
1
        30

┌────────────────────────────────────────────────┐
│  IMAGING APPARATUS          ┌──────────────┐     │
│                             │    INPUT     │     │
│                             └──────────────┘     │
│                                                  │
│    HORIZONTAL REDUCTION RATE │   VERTICAL        │
│                              │   REDUCTION       │
│                              ▼   RATE ▼          │
│   ┌──────────┐            ┌──────────────┐       │
│   │ IMAGING  │            │PICTURE IMAGE │       │
│   │          │   PICTURE  │ PROCESSING   │───────┼──────▶
│   │ ELEMENT  │───▶ IMAGE   │ APPARATUS    │       │  REDUCED PICTURE
│   └──────────┘    DATA     └──────────────┘       │  IMAGE DATA
│                                                  │
└────────────────────────────────────────────────┘
        20                        10
```

FIG. 25

INPUT
APPARATUS

6

2

HORIZONTAL REDUCTION RATE

VERTICAL REDUCTION RATE

IMAGING APPARATUS

IMAGING
ELEMENT

PICTURE
IMAGE
DATA

PICTURE IMAGE
PROCESSING
APPARATUS

REDUCED PICTURE
IMAGE DATA

20

10

FIG. 26

7

COMMUNICATION
APPARATUS

HORIZONTAL REDUCTION RATE

VERTICAL REDUCTION RATE

REDUCED PICTURE
IMAGE DATA

NETWORK

3

HORIZONTAL REDUCTION RATE

VERTICAL REDUCTION RATE

REDUCED PICTURE
IMAGE DATA

IMAGING APPARATUS

IMAGING
ELEMENT

PICTURE
IMAGE
DATA

PICTURE IMAGE
PROCESSING
APPARATUS

20

10

FIG. 27

IMAGING APPARATUS

IMAGING ELEMENT

PICTURE IMAGE DATA

INPUT APPARATUS

HORIZONTAL REDUCTION RATE

VERTICAL REDUCTION RATE

PICTURE IMAGE PROCESSING APPARATUS

REDUCED PICTURE IMAGE DATA

FIG. 28

7

```
COMMUNICATION
  APPARATUS
```

HORIZONTAL REDUCTION RATE

VERTICAL REDUCTION RATE

REDUCED PICTURE
IMAGE DATA

NETWORK

5

HORIZONTAL REDUCTION RATE

VERTICAL REDUCTION RATE

REDUCED PICTURE
IMAGE DATA

```
IMAGING APPARATUS

  IMAGING
  ELEMENT      PICTURE
               IMAGE
               DATA
```

```
PICTURE IMAGE
  PROCESSING
  APPARATUS
```

10

## INTERNATIONAL SEARCH REPORT

| International application No. |
|---|
| **PCT/JP2022/015992** |

### A. CLASSIFICATION OF SUBJECT MATTER

**H04N 1/393**(2006.01)i
FI: H04N1/393

According to International Patent Classification (IPC) or to both national classification and IPC

### B. FIELDS SEARCHED

Minimum documentation searched (classification system followed by classification symbols)

H04N1/393

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2009-159631 A (CANON INC) 16 July 2009 (2009-07-16) | 1-12, 16 |
|  | paragraphs [0061]-[0064], fig. 13-15 |  |
| Y |  | 13-15 |
| Y | JP 2006-24998 A (MEGACHIPS LSI SOLUTIONS INC) 26 January 2006 (2006-01-26) | 13-15 |
|  | paragraphs [0024]-[0073], fig. 1-4 |  |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date |  |  |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means |  |  |
| "P" | document published prior to the international filing date but later than the priority date claimed | "&" | document member of the same patent family |

| Date of the actual completion of the international search | Date of mailing of the international search report |
|---|---|
| **10 June 2022** | **21 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** |  |
|  | Telephone No. |

Form PCT/ISA/210 (second sheet) (January 2015)

**INTERNATIONAL SEARCH REPORT**
Information on patent family members

International application No.

**PCT/JP2022/015992**

| Patent document cited in search report | | | Publication date (day/month/year) | Patent family member(s) | Publication date (day/month/year) |
|---|---|---|---|---|---|
| JP | 2009-159631 | A | 16 July 2009 | US 2003/0158608 A1 paragraphs [0332]-[0335], fig. 35-37 | |
| JP | 2006-24998 | A | 26 January 2006 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014110592 A
- JP 2012242297 A